# EUROPEAN PATENT APPLICATION

(11) **EP 4 811 096 A1**
(43) Date of publication of application: **23.09.2026**
(21) Application number: 24919024.0
(22) Date of filing: 13.12.2024
(51) Int. Cl.: G06F 3/0484, G06F 3/0482, G06F 3/04817, G06F 9/451

(54) **ELECTRONIC DEVICE AND CATEGORY-BASED MESSAGE DISPLAY METHOD USING SAME**

(30) Priority: 16.01.2024 KR 20240006548; 06.02.2024 KR 20240018216
(71) Applicant: Samsung Electronics Co., Ltd., Suwon-si, Gyeonggi-do 16677 (KR)
(72) Inventor: KIM, Junhee, Suwon-si, Gyeonggi-do 16677 (KR); KIM, Sungyou, Suwon-si, Gyeonggi-do 16677 (KR); KIM, Hyunil, Suwon-si, Gyeonggi-do 16677 (KR); PARK, Sungmin, Suwon-si, Gyeonggi-do 16677 (KR); LEE, Seulgi, Suwon-si, Gyeonggi-do 16677 (KR); HAN, Yonggil, Suwon-si, Gyeonggi-do 16677 (KR)
(74) Representative: Gulde & Partner
(86) International application number: PCT/KR2024/096907
(87) International publication number: WO 2025/155000

(57) **Abstract**

According to an embodiment of the present disclosure, an electronic device may enable: when a message is received, identifying category information of the message on the basis of the content of the message; when an input for executing an application related to the message is detected, displaying a first user interface on a display, the first user interface including information related to unread messages based on category information satisfying a designated condition among at least one piece of category information and a list of the unread messages; when a first user input for displaying the unread messages is detected, displaying a second user interface on the display, the second user interface including at least one object indicating the at least one piece of category information, information related to at least one unread message mapped to the at least one piece of category information, and the list of the unread messages; and when a second user input for selecting one of the at least one object is detected, displaying a third user interface on the display, the third user interface including at least one message mapped to category information corresponding to the selected object.

## Description

### [Technical Field]

Embodiments of the present disclosure relate to an electronic device and a category-based message display method using the same.

### [Background Art]

An electronic device may provide various message transmission and reception services such as short messaging service (SMS), multimedia messaging service (MMS), and rich communications service (RCS). In case that a message is received through the message transmission and reception service and the received message is not identified by a user, the electronic device may inform the user that an unread message exists. As an example, the electronic device may inform the user that the unread message exists by displaying an indicator such as a badge for the number of unread messages around an icon corresponding to an application related to the received message. The user may identify that the unread message has been received through the indicator and may identify the unread message by executing the application related to the message.

The information described above may be provided as the related art for the purpose of enhancing the understanding of the present disclosure. No assertion or determination is made with respect to the applicability of any of the above-mentioned as the prior art related to the present disclosure.

### [Disclosure of Invention]

### [Technical Problem]

In case that an application related to a message is executed, the electronic device may display a list of unread messages classified based on sending information of a sender who transmitted the message. Inconvenience may exist because the user has to identify the unread messages by individually selecting the unread messages classified based on the sending information.

The electronic device according to various embodiments of the present disclosure, in case that a message is received, identifies category information of the message based on contents of the received message, and in case that an input for displaying an unread message is detected, may display information related to unread messages classified based on the category information.

### [Solution to Problem]

According to an embodiment of the present disclosure, an electronic device may comprise a display, a memory storing instructions, and a processor. According to an embodiment, the instructions, when executed by the processor, may cause the electronic device to, in case that a message is received, identify category information of the message based on contents of the message. According to an embodiment, the instructions, when executed by the processor, may cause the electronic device to, in case that an input for executing an application related to the message is detected, display, on the display, a first user interface including information related to unread messages based on category information satisfying a predetermined condition among at least one piece of category information and a list of the unread messages. According to an embodiment, the instructions, when executed by the processor, may cause the electronic device to, in case that a first user input for displaying the unread messages is detected, display, on the display, a second user interface including at least one object indicating the at least one piece of category information, information related to at least one unread message mapped to the at least one piece of category information, and the list of the unread messages. According to an embodiment, the instructions, when executed by the processor, may cause the electronic device to, in case that a second user input for selecting one of the at least one object is detected, display, on the display, a third user interface including at least one message mapped to category information corresponding to the selected object.

According to an embodiment of the present disclosure, a category-based message display method may comprise identifying category information of a message based on contents of the message in case that the message is received. According to an embodiment, a category-based message display method may comprise displaying, on a display, a first user interface including information related to unread messages based on category information satisfying a predetermined condition among at least one piece of category information and a list of the unread messages in case that an input for executing an application related to the message is detected. According to an embodiment, a category-based message display method may comprise displaying, on a display, a second user interface including at least one object indicating the at least one piece of category information, information related to at least one unread message mapped to the at least one piece of category information, and the list of the unread messages in case that a first user input for displaying an unread message is detected. According to an embodiment, a category-based message display method may comprise displaying, on the display, a third user interface including at least one message mapped to category information corresponding to the selected object in case that a second user input for selecting one of the at least one object is detected.

According to an embodiment of the present disclosure, a non-transitory computer-readable storage medium (or a computer program product) storing one or more programs may be described. The one or more programs according to an embodiment, when executed by a processor of an electronic device, may comprise an instruction for identifying category information of a message based on contents of the message in case that the message is received. The one or more programs according to an embodiment, when executed by a processor of an electronic device, may comprise an instruction for displaying, on a display, a first user interface including information related to unread messages based on category information satisfying a predetermined condition among at least one piece of category information and a list of the unread messages in case that an input for executing an application related to the message is detected. The one or more programs according to an embodiment, when executed by a processor of an electronic device, may comprise an instruction for displaying, on a display, a second user interface including at least one object indicating the at least one piece of category information, information related to at least one unread message mapped to the at least one piece of category information, and the list of the unread messages in case that a first user input for displaying an unread message is detected. The one or more programs according to an embodiment, when executed by a processor of an electronic device, may comprise an instruction for displaying, on the display, a third user interface including at least one message mapped to category information corresponding to the selected object in case that a second user input for selecting one of the at least one object is detected.

### [Advantageous Effects of Invention]

The electronic device according to an embodiment of the present disclosure may provide a user experience in which a user may easily identify what category information an unread message belongs to by providing information related to unread messages classified based on category information together with the category information. Accordingly, the user may preferentially identify unread messages of a category of interest.

The electronic device according to an embodiment of the present disclosure may provide not only a user experience in which unread messages classified into specific category information may be identified at once by providing a user with the unread messages classified into the selected category information according to selecting the category information, but also a user experience in which the unread messages may be changed to a read state or unnecessary messages may be deleted.

### [Brief Description of Drawings]

FIG. 1 is a block diagram of an electronic device in a network environment according to an embodiment of the present disclosure.
FIG. 2 is a block diagram illustrating an electronic device according to an embodiment of the present disclosure.
FIG. 3 is a flowchart for explaining a method for classifying a message based on category information according to an embodiment of the present disclosure.
FIG. 4 is a view for explaining a method for classifying a message based on category information according to an embodiment of the present disclosure.
FIG. 5 is a flowchart for explaining a method for displaying a message based on category information according to an embodiment of the present disclosure.
FIG. 6 is a flowchart for explaining a method for displaying a message based on category information according to an embodiment of the present disclosure.
FIG. 7 is a view for explaining a method for displaying a message based on category information according to an embodiment of the present disclosure.
FIG. 8 is a flowchart for explaining a method for classifying a message in case that there are a plurality of pieces of category information based on contents of the message according to an embodiment of the present disclosure.
FIG. 9 is a view for explaining a method for classifying a message in case that there are a plurality of pieces of category information based on contents of the message according to an embodiment of the present disclosure.
FIG. 10 is a flowchart for explaining a method for determining one piece of category information satisfying a predetermined condition in case that a plurality of pieces of category information satisfy the predetermined condition among at least one piece of category information based on contents of a message according to an embodiment of the present disclosure.
FIG. 11 is a flowchart for explaining a method for displaying information related to unread messages based on category information satisfying a predetermined condition according to an embodiment of the present disclosure.
FIG. 12A, FIG. 12B, and FIG. 13 are views for explaining a method for changing category information of a message according to an embodiment of the present disclosure.
FIG. 14 is a view for explaining a method for adding category information for classifying a message according to an embodiment of the present disclosure.
FIG. 15 is a block diagram illustrating a generative artificial intelligence system according to an embodiment of the present disclosure.

### [Mode for the Invention]

Hereinafter, embodiments of the disclosure will be described in detail with reference to the accompanying drawings so that those skilled in the art to which the disclosure pertains can easily implement the disclosure. However, the disclosure may be implemented in various different forms and is not limited to embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

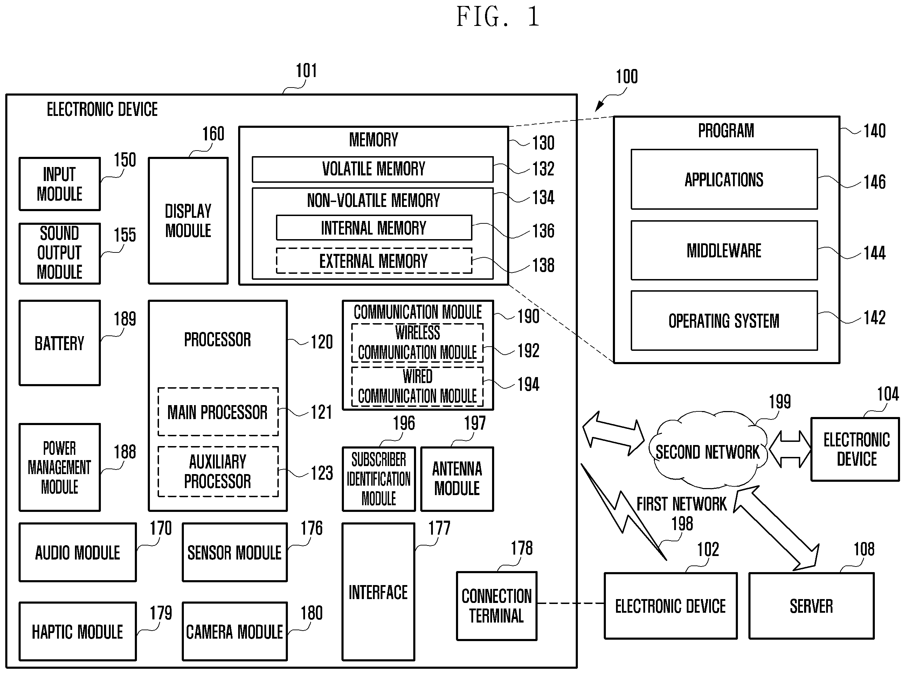

FIG. 1 is a block diagram illustrating an electronic device 101 in a network environment 100 according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., through wires) or wirelessly. According to an embodiment, the interface 177 may include, for example, a high-definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., an application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, Wi-Fi direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., an mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

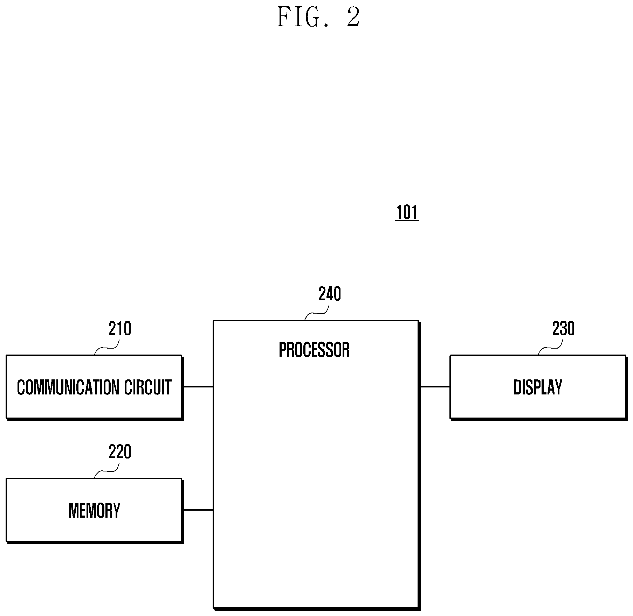

FIG. 2 is a block diagram illustrating an electronic device 101 according to an embodiment of the present disclosure.

With reference to FIG. 2, the electronic device 101 (e.g., the electronic device 101 of FIG. 1) may include a communication circuit 210 (e.g., the communication module 190 of FIG. 1), a memory 220 (e.g., the memory 130 of FIG. 1), a display 230 (e.g., the display module 160 of FIG. 1), and/or a processor 240 (e.g., the processor 120 of FIG. 1).

According to an embodiment of the present disclosure, the communication circuit 210 (e.g., the communication module 190 of FIG. 1) may control a communication connection between the electronic device 101 and at least one external electronic device (e.g., the electronic device 102 or the electronic device 104 of FIG. 1) and/or a server (e.g., the server 108 of FIG. 1) under control of the processor 240.

According to an embodiment of the present disclosure, the memory 220 (e.g., the memory 130 of FIG. 1) performs functions of storing a program (e.g., the program 140 of FIG. 1) for processing and control of the processor 240 of the electronic device 101, an operating system (OS) (e.g., the operating system 142 of FIG. 1), various applications, and/or input/output data, and may store a program for controlling overall operations of the electronic device 101. The memory 220 may store various setting information required for processing functions related to various embodiments of the present disclosure in the electronic device 101. The memory 220 may store executable instructions. For example, the memory 220 may store instructions that, when executed by the processor 240, cause the operations of the electronic device 101 to be performed. For example, the instructions may be stored in a computer readable recording medium. The recording medium may be tangible and non-transitory. The memory 220 and/or the recording medium may store one or more programs including the instructions.

In an embodiment, the memory 220 may store instructions for identifying category information of a message based on contents of the message in case that the message is received. The memory 220 may store instructions for displaying, on the display 230, a first user interface including at least one object (or at least one indicator) indicating at least one piece of category information, information related to at least one unread message mapped to the at least one piece of category information, and a list of unread messages, in case that a first user input for displaying the unread messages is detected. The memory 220 may store instructions for displaying, on the display 230, a second user interface including at least one message mapped to category information corresponding to a selected object, in case that a second user input for selecting one of the at least one object is detected.

In an embodiment, the memory 220 may store the received message and the category information mapped to the received message.

According to an embodiment of the present disclosure, the display 230 displays an image under the control of the processor 240, and may be implemented as any one of a liquid crystal display (LCD), a light-emitting diode (LED) display, a micro LED (µLED) display, an organic light-emitting diode (OLED) display, an active matrix organic light-emitting diode (AMOLED) display, a micro electro mechanical systems (MEMS) display, an electronic paper display, a flexible display, a foldable display, or a rollable display. However, the present disclosure is not limited thereto.

In an embodiment, the display 230 may display a screen (or a user interface) of an application related to a message in case that the application related to the message is executed under the control of the processor 240. The display 230 may display a first user interface including at least one object (or at least one indicator) indicating at least one piece of category information, information related to at least one unread message mapped to the at least one piece of category information, and a list of unread messages, in case that a first user input for displaying the unread messages is detected under the control of the processor 240. The display 230 may display a second user interface including at least one message mapped to category information corresponding to a selected object, in case that a second user input for selecting one of the at least one object is detected under the control of the processor 240.

According to an embodiment of the present disclosure, the processor 240 may include, for example, a micro controller unit (MCU), and may control a plurality of hardware components connected to the processor 240 by driving an operating system (OS) or an embedded software program. The processor 240 may control a plurality of hardware components according to, for example, instructions (e.g., the program 140 of FIG. 1) stored in the memory 220.

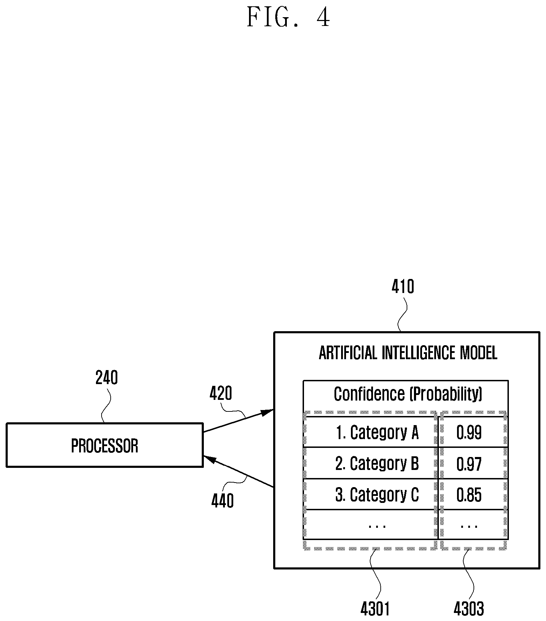

In an embodiment, the processor 240 may identify category information of a message based on contents of the message in case that the message is received. For example, in case that a message is received, the processor 240 may acquire category information determined based on message contents from an artificial intelligence model (e.g., the artificial intelligence model 410 of FIG. 4) and identify the same.

In an embodiment, the artificial intelligence model 410 may include an on-device artificial intelligence model (e.g., a generative artificial intelligence (Gen AI) model). For example, the artificial intelligence model may be included in the processor 240 or the memory 220. The present disclosure is not limited thereto, and the artificial intelligence model 410 may be included in the electronic device 101 as one component (e.g., a module or a circuit).

In an embodiment, the category information may include one of promotion, service provider, bank, payment, shopping, reservation, delivery, family, friend, work, reminder, and other. However, the present disclosure is not limited thereto.

In an embodiment, the processor 240 may display, on the display 230, a first user interface including at least one object (or at least one indicator) indicating at least one piece of category information, information related to at least one unread message mapped to the at least one piece of category information, and a list of unread messages, in case that a first user input for displaying the unread messages is detected.

In an embodiment, the first user input for displaying the unread messages may include an input for executing an application related to a message. However, the present disclosure is not limited thereto. For example, the first user input for displaying the unread messages may include an input for selecting an object (or an item) for displaying only unread messages on a screen of an application related to a message displayed on the display 230. As another example, the processor 240 may display a floating button (e.g., a graphic object, a visual object, or an item) for displaying an unread message regardless of a screen displayed on the display 230. In this case, the first user input for displaying the unread messages may include an input for selecting the floating button.

In an embodiment, the at least one object (or at least one indicator) indicating the at least one piece of category information may include one of an item, an icon, a text-type object, or an image-type object. However, the present disclosure is not limited thereto. In an embodiment, the information related to the at least one unread message mapped to the at least one piece of category information may include the number of unread messages classified into (or included in the at least one piece of category information) each of the at least one piece of category information. However, the present disclosure is not limited thereto. In an embodiment, the list of unread messages may be displayed based on at least one of time information of a recently received message or sending information of a message.

In an embodiment, the processor 240 may display, on the display 230, a second user interface including at least one message mapped to category information corresponding to a selected object, in case that a second user input for selecting one of the at least one object is detected. The at least one message included in the second user interface may include at least one message classified based on the category information regardless of sending information of the at least one message.

The electronic device 101 according to an embodiment of the present disclosure may include a display 230, a memory 220 storing instructions, and a processor 240. The instructions according to an embodiment, when executed by the processor 240, may cause the electronic device 101 to, in case that a message is received, identify category information of the message based on contents of the message. The instructions according to an embodiment, when executed by the processor 240, may cause the electronic device 101 to, in case that an input for executing an application related to the message is detected, display, on the display 230, a first user interface including information related to unread messages based on category information satisfying a predetermined condition among at least one piece of category information and a list of the unread messages. The instructions according to an embodiment, when executed by the processor 240, may cause the electronic device 101 to, in case that a first user input for displaying an unread message is detected, display, on the display 230, a second user interface including at least one object indicating the at least one piece of category information, information related to at least one unread message mapped to the at least one piece of category information, and the list of the unread messages. The instructions according to an embodiment, when executed by the processor 240, may cause the electronic device 101 to, in case that a second user input for selecting one of the at least one object is detected, display, on the display 230, a third user interface including at least one message mapped to category information corresponding to the selected object.

The at least one message included in the third user interface according to an embodiment may include at least one message classified based on the category information regardless of sending information of the at least one message.

The information related to the unread messages based on the category information satisfying the predetermined condition according to an embodiment may include the number of unread messages mapped to the category information satisfying the predetermined condition and the total number of the unread messages.

The category information satisfying the predetermined condition according to an embodiment may include at least one of category information having a largest number of unread messages, category information recently selected by a user, category information having a highest frequency of selection by the user, or category information having a highest frequency of selection by the user for each time period.

The instructions according to an embodiment, when executed by the processor 240, may cause the electronic device 101 to, in case that a plurality of pieces of category information satisfy the predetermined condition, determine one piece of category information among the plurality of pieces of category information, based on category information having a highest frequency of selection by the user for a predetermined time period, category information of messages selected by the user in a specific time period, or category information of messages having receiving and sending histories for a predetermined time period.

The instructions according to an embodiment, when executed by the processor 240, may cause the electronic device 101 to, after the third user interface is displayed, in case that a third user input for changing a message among the at least one message included in the third user interface to a read state is detected, delete the message changed to the read state from the third user interface. The instructions according to an embodiment, when executed by the processor 240, may cause the electronic device 101 to, in case that the third user input is not detected, maintain the message in an unread state.

The instructions according to an embodiment, when executed by the processor 240, may cause the electronic device 101 to, in case that a message is received, extract contents of the message. The instructions according to an embodiment, when executed by the processor 240, may cause the electronic device 101 to transmit the extracted contents of the message and a threshold value related to category information to the artificial intelligence model 410. The instructions according to an embodiment, when executed by the processor 240, may cause the electronic device 101 to acquire, from the artificial intelligence model 410, category information of the message determined by the artificial intelligence model 410, based on the contents of the message and the threshold value related to the category information. The instructions according to an embodiment, when executed by the processor 240, may cause the electronic device 101 to map the message and the acquired category information and store the same in the memory 220.

The instructions according to an embodiment, when executed by the processor 240, may cause the electronic device 101 to acquire, from the artificial intelligence model 410, a probability value related to the category information of the message together with the category information of the message. The threshold value related to the category information according to an embodiment may be adjustable based on the acquired probability value.

The instructions according to an embodiment, when executed by the processor 240, may cause the electronic device 101 to, in case that the category information of the message identified based on the contents of the message includes a plurality of pieces of category information, extract, based on sending information of the message, a designated number of messages received for a predetermined time period from the sending information. The instructions according to an embodiment, when executed by the processor 240, may cause the electronic device 101 to extract contents of each of the designated number of messages. The instructions according to an embodiment, when executed by the processor 240, may cause the electronic device 101 to transmit the extracted contents of each of the messages, the plurality of pieces of category information, and the threshold value related to the category information to the artificial intelligence model 410. The instructions according to an embodiment, when executed by the processor 240, may cause the electronic device 101 to acquire, from the artificial intelligence model 410, one piece of category information determined by the artificial intelligence model 410, based on the contents of each of the messages, the plurality of pieces of category information, and the threshold value related to the category information among the plurality of pieces of category information. The instructions according to an embodiment, when executed by the processor 240, may cause the electronic device 101 to map the message and the acquired category information and store the same in the memory 220.

The instructions according to an embodiment, when executed by the processor 240, may cause the electronic device 101 to, in case that one of at least one message included in the third user interface is selected, identify sending information of the selected message. The instructions according to an embodiment, when executed by the processor 240, may cause the electronic device 101 to display, on the display 230, a fourth user interface including at least one message related to the identified sending information.

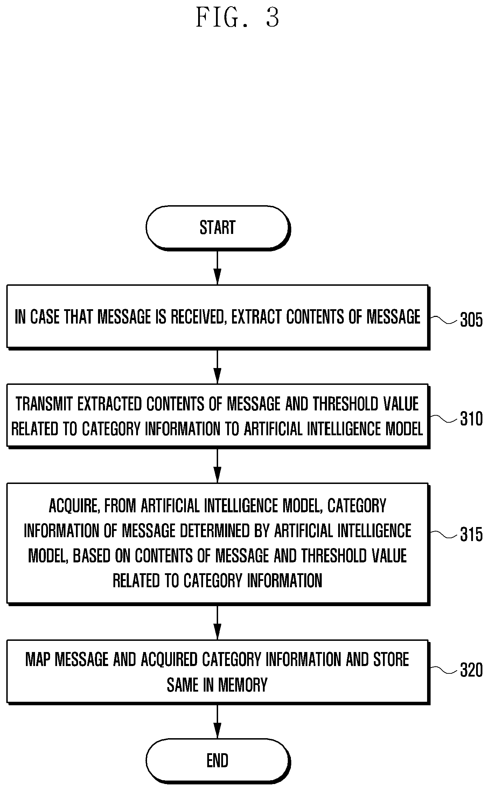

FIG. 3 is a flowchart for explaining a method for classifying a message based on category information according to an embodiment of the present disclosure.

In the following embodiments, each of the operations of FIG. 3 may be performed sequentially, but are not necessarily performed sequentially. For example, the order of each of the operations of FIG. 3 may be changed, and at least two operations may be performed in parallel.

According to an embodiment, operation 305 to operation 320 of FIG. 3 may be understood as being performed by a processor (e.g., the processor 240 of FIG. 2) of an electronic device (e.g., the electronic device 101 of FIG. 1 and/or FIG. 2).

With reference to FIG. 3, the processor 240 may extract contents of a message in case that the message is received in operation 305.

In an embodiment, the contents of the message may include at least one of text, an image, a video, an icon, or an emoticon (or emoji).

In an embodiment, the message may be one of a short messaging service (SMS) message, a multimedia messaging service (MMS) message, and a rich communications service (RCS) message. For example, in case that an SMS message or an RCS message is received, the processor 240 may extract the contents included in the SMS message or the RCS message. As another example, in case that an MMS message is received, the processor 240 may download the MMS message and then extract the contents included in the downloaded MMS message.

In an embodiment, the processor 240 may transmit the extracted contents of the message and a threshold value related to category information to an artificial intelligence model (e.g., the artificial intelligence model 410 of FIG. 4) in operation 310.

In an embodiment, the threshold value related to the category information may mean a threshold value for determining the category information of the message. For example, the category information of the message may have a plurality of pieces of category information. In this case, the threshold value related to the category information may be utilized to determine one piece of category information among the plurality of pieces of category information. For example, determining one piece of category information among the plurality of pieces of category information may mean determining one piece of category information that is close to (or similar to) the category information of the message among the plurality of pieces of category information.

In an embodiment, the artificial intelligence model includes an on-device artificial intelligence model (e.g., a generative artificial intelligence (Gen AI) model). For example, the artificial intelligence model may be included in the processor 240 or the memory (e.g., the memory 220 of FIG. 2). The present disclosure is not limited thereto, and the artificial intelligence model may be included in the electronic device 101 as one component (e.g., a module or a circuit). In this case, the processor 240 may transmit the extracted contents of the message and the threshold value related to the category information to the artificial intelligence model included in the processor 240 or the memory 220.

The present disclosure is not limited thereto, and the artificial intelligence model may be included in a server (e.g., the server 108 of FIG. 1). In this case, the processor 240 may transmit the extracted contents of the message and the threshold value related to the category information to the server 108 including the artificial intelligence model through the communication circuit (e.g., the communication circuit 210 of FIG. 2).

In an embodiment, the processor 240 may acquire, from the artificial intelligence model, the category information of the message determined by the artificial intelligence model, based on the contents of the message and the threshold value related to the category information in operation 315.

The category information according to an embodiment may include promotion, service provider, bank, payment, shopping, reservation, delivery, family, friend, work, reminder, and other. However, the present disclosure is not limited thereto.

In an embodiment, the artificial intelligence model may determine the category information of the message based on the contents of the message received from the processor 240 and the threshold value related to the category information. For example, the artificial intelligence model may determine at least one piece of category information corresponding to (or similar to) the contents of the message based on the contents of the message received from the processor 240. The artificial intelligence model may determine one piece of category information among the determined at least one piece of category information based on the threshold value related to the category information. For example, the artificial intelligence model may calculate a probability value between the contents of the message and the at least one piece of category information. The artificial intelligence model may determine one piece of category information having a probability value equal to or greater than the threshold value (or a probability value exceeding the threshold value) among the calculated probability values between the contents of the message and the at least one piece of category information. The artificial intelligence model may transmit the determined one piece of category information to the processor 240. The present disclosure is not limited thereto, and the artificial intelligence model may transmit the probability value of the one piece of category information to the processor 240 together with the one piece of category information.

In an embodiment, the threshold value related to the category information may be adjusted based on the probability value of the one piece of category information received from the artificial intelligence model. For example, in case that the category information of the message includes a plurality of pieces of category information, the processor 240 may adjust the threshold value higher to determine one piece of category information among the plurality of pieces of category information. As another example, in case that there is no category information corresponding to the category information of the message, the processor 240 may adjust the threshold value lower to determine one piece of category information.

In an embodiment, the processor 240 may map the message and the acquired category information and store the same in the memory 220 in operation 320.

In an embodiment, although not illustrated, the memory 220 may include a first DB (database) for storing the received message and a second DB for storing message information classified based on the category information (e.g., category information mapped to the received message). The processor 240 may map the message and the acquired category information and store the same in the second DB of the memory 220.

Although it has been described that the first DB and the second DB according to various embodiments are included in the memory 220, the present disclosure is not limited thereto. For example, the first DB and the second DB may be included in an application related to a message.

In an embodiment, although not illustrated, the artificial intelligence model may identify whether the message is a message that needs to be identified again by the user based on the contents of the message, even if the message is a message read by the user. For example, in case that the contents of the message include information related to a ticket, information related to a reservation, information related to a gifticon or a coupon, and/or information related to a high-value transaction, the artificial intelligence model may identify the message as a message that needs to be identified again by the user. In this case, the artificial intelligence model may classify the category information as a reminder and provide the message that needs to be identified again by the user classified as the reminder. Accordingly, the user may identify the message that needs to be identified again through the reminder category information even if it is a read message.

FIG. 4 is a view for explaining a method for classifying a message based on category information according to an embodiment of the present disclosure.

With reference to FIG. 4, a processor (e.g., the processor 240 of FIG. 2) of an electronic device (e.g., the electronic device 101 of FIG. 1 and/or FIG. 2) may extract contents of a message in case that the message is received. For example, the contents of the message may include at least one of text, an image, a video, an icon, or an emoticon (or emoji).

In an embodiment, the processor 240 may transmit 420 the extracted contents of the message and a threshold value related to category information to the artificial intelligence model 410.

In an embodiment, the artificial intelligence model 410 includes an on-device artificial intelligence model (e.g., a generative artificial intelligence model). In an embodiment, the artificial intelligence model 410 may be included in the electronic device 101 as one component (e.g., a module or a circuit). The present disclosure is not limited thereto, and for example, the artificial intelligence model 410 may be included in the processor 240, the memory (e.g., the memory 220 of FIG. 2), or may be included in a server (e.g., the server 108 of FIG. 1).

In an embodiment, the artificial intelligence model 410 may, as illustrated in FIG. 4, determine at least one piece of category information 4301 (e.g., first category information (e.g., category A), second category information (e.g., category B), and third category information (e.g., category C)) corresponding to (or similar to) the contents of the message based on the contents of the message received from the processor 240. The artificial intelligence model 410 may calculate a probability value 4303 (or a confidence value) (e.g., a probability value (e.g., 0.99) of the first category information (e.g., category A), a probability value (e.g., 0.97) of the second category information (e.g., category B), and a probability value (e.g., 0.85) of the third category information (e.g., category C)) between the contents of the message and the determined at least one piece of category information 4301 (e.g., the first category information (e.g., category A), the second category information (e.g., category B), and the third category information (e.g., category C)).

In an embodiment, the artificial intelligence model 410 calculates the probability value 4303 of each of the determined at least one piece of category information 4301 and may determine one piece of category information (e.g., the first category information (category A)) having a probability value equal to or greater than a threshold value (or one piece of category information having a probability value exceeding the threshold value) among the calculated probability values 4303. For example, assuming that the threshold value is about 0.98, the artificial intelligence model 410 may determine one piece of category information having a probability value equal to or greater than the threshold value (e.g., about 0.98) among the calculated probability values 4303 as the first category information (e.g., category A).

In an embodiment, the artificial intelligence model 410 may transmit 440 the determined first category information (e.g., category A) and the probability value (e.g., 0.99) of the first category information (e.g., category A) to the processor 240.

The determined first category information (e.g., category A) according to an embodiment may be utilized to classify a message (e.g., an unread message) and to provide (or display) the message classified based on the first category information (e.g., category A).

The probability value of the first category information (e.g., category A) according to an embodiment may be utilized to adjust a threshold value (e.g., a threshold value related to category information) for determining one piece of category information in case that the category information corresponding to the contents of the message is determined as a plurality of pieces.

In an embodiment, the processor 240 may map the message and the first category information (e.g., category A) acquired from the artificial intelligence model 410 and store the same in a memory (e.g., the memory 220 of FIG. 2) (or a database of an application related to the message).

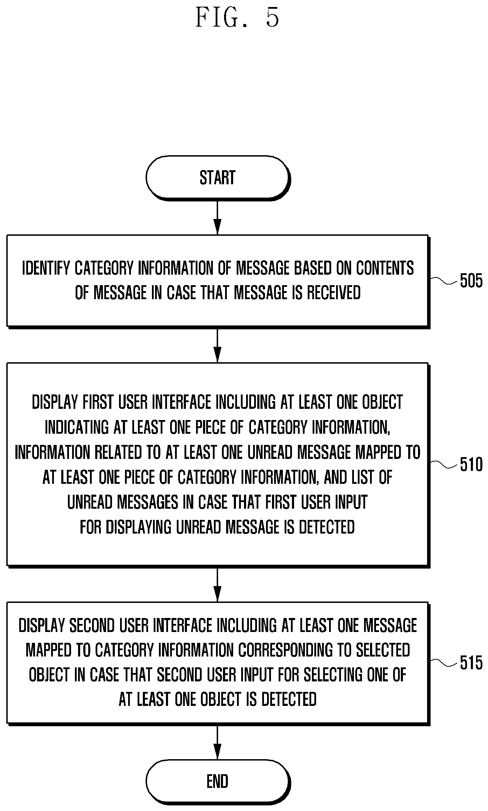

FIG. 5 is a flowchart for explaining a method for displaying a message based on category information according to an embodiment of the present disclosure.

In the following embodiments, each of the operations of FIG. 5 may be performed sequentially, but are not necessarily performed sequentially. For example, the order of each of the operations of FIG. 5 may be changed, and at least two operations may be performed in parallel.

According to an embodiment, operation 505 to operation 515 of FIG. 5 may be understood as being performed by a processor (e.g., the processor 240 of FIG. 2) of an electronic device (e.g., the electronic device 101 of FIG. 1 and/or FIG. 2).

With reference to FIG. 5, the processor 240 may identify category information of a message based on contents of the message in case that the message is received in operation 505. For example, as described in FIG. 3 and FIG. 4 above, in case that a message is received, the processor 240 may acquire category information determined based on message contents from an artificial intelligence model (e.g., the artificial intelligence model 410 of FIG. 4). The processor 240 may identify the category information based on the contents of the message acquired from the artificial intelligence model 410. For example, the category information may include promotion, service provider, bank, payment, shopping, reservation, delivery, family, friend, work, reminder, and/or other. However, the present disclosure is not limited thereto.

In an embodiment, the processor 240 may, in operation 510, in case that a first user input for displaying an unread message is detected, display, on a display (e.g., the display 230 of FIG. 2), a first user interface including at least one object (or at least one indicator) indicating at least one piece of category information, information related to at least one unread message mapped to the at least one piece of category information, and a list of unread messages.

In an embodiment, the first user input for displaying the unread messages may include an input for executing an application related to a message. However, the present disclosure is not limited thereto. For example, based on an input for executing an application related to a message being detected, the processor 240 may display a screen (or a user interface) of the application related to the message on the display 230. The screen of the application related to the message may be a screen including a list of at least one first message group including at least one unread message and a list of at least one second message group including at least one read message. The list of the at least one first message group including at least one unread message and the list of the at least one second message group including at least one read message included in the application related to the message may be in a state of being displayed based on sending information (e.g., telephone number information, email address information, name information) and reception time information of the message. In this case, the first user input may include an input for selecting an object (or an item) for displaying only unread messages on the screen of the application related to the message displayed on the display 230. As another example, the processor 240 may display a floating button (e.g., a graphic object, a visual object, or an item) for displaying an unread message regardless of a screen displayed on the display 230. In this case, the first user input may include an input for selecting the floating button.

In an embodiment, the at least one object (or at least one indicator) indicating the at least one piece of category information may include one of an item, an icon, a text-type object, or an image-type object. However, the present disclosure is not limited thereto.

In an embodiment, the information related to the at least one unread message mapped to the at least one piece of category information may include the number of unread messages classified into (or included in the at least one piece of category information) each of the at least one piece of category information. However, the present disclosure is not limited thereto.

In an embodiment, the list of unread messages may be displayed based on at least one of time information of a recently received message or sending information of a message.

In an embodiment, the processor 240 may, in operation 515, in case that a second user input for selecting one of the at least one object is detected, display, on the display 230, a second user interface including at least one message mapped to category information corresponding to the selected object.

In an embodiment, the at least one message included in the second user interface may include at least one message classified based on the category information regardless of sending information of the at least one message.

In an embodiment, in case of displaying the second user interface including the at least one message mapped to the category information corresponding to the selected object, the processor 240 may change the at least one message included in the second user interface to a read state. Accordingly, in case that the first user interface is displayed, the processor 240 may not display, on the display 230, the category information corresponding to the selected object and the information related to the at least one unread message mapped to the category information corresponding to the selected object. The present disclosure is not limited thereto, and based on changing the at least one message included in the second user interface to the read state, the processor 240 may control so that an indicator (e.g., a badge) related to the unread message displayed around the at least one message included in the second user interface is not displayed.

The present disclosure is not limited thereto, and in case of displaying the second user interface including the at least one message mapped to the category information corresponding to the selected object, the processor 240 may detect an input for changing the at least one message included in the second user interface to the read state. For example, the input for changing to the read state may include an input for selecting one of the at least one message. However, the present disclosure is not limited thereto. In an embodiment, in case of detecting the input for changing the at least one message included in the second user interface to the read state, the processor 240 may change a message for which the input for changing to the read state is detected among the at least one message to the read state, and maintain a message for which the input is not detected in an unread state.

In an embodiment, in case that an input for selecting one of the at least one message included in the second user interface is detected, the processor 240 may display, on the display 230, a third user interface related to the selected message. For example, the third user interface may be a user interface related to sending information of the selected message. For example, the third user interface may be a user interface including at least one message received from the sending information of the selected message and/or at least one message transmitted to the sending information of the selected message.

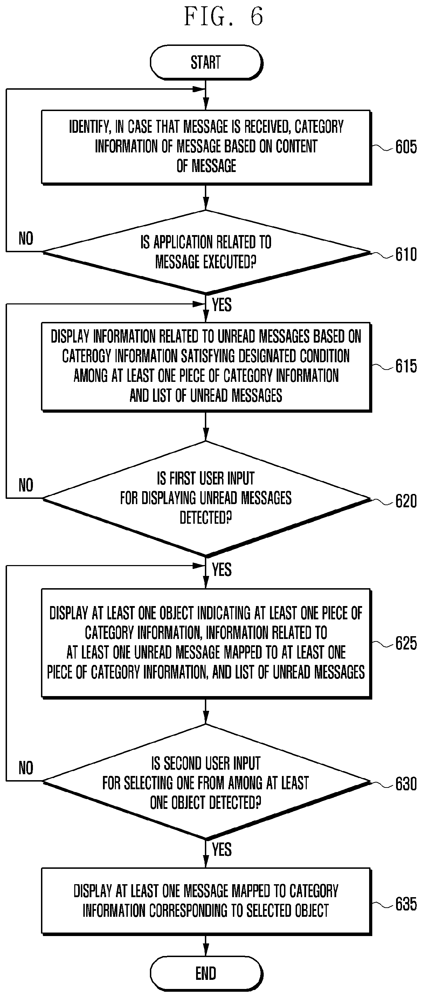

FIG. 6 is a flowchart for explaining a method for displaying a message based on category information according to an embodiment of the present disclosure.

In the following embodiments, each of the operations of FIG. 6 may be performed sequentially, but are not necessarily performed sequentially. For example, the order of each of the operations of FIG. 6 may be changed, and at least two operations may be performed in parallel.

According to an embodiment, operation 605 to operation 635 of FIG. 6 may be understood as being performed by a processor (e.g., the processor 240 of FIG. 2) of an electronic device (e.g., the electronic device 101 of FIG. 1 and/or FIG. 2).

FIG. 6 according to various embodiments is a view embodying the operations of FIG. 5 described above.

Operation 605 and operation 620 to operation 635 of FIG. 6 according to various embodiments are substantially the same as operation 505 to operation 515 of FIG. 5 described above, and thus detailed descriptions thereof may be replaced with the description of FIG. 5.

With reference to FIG. 6, the processor 240 may identify category information of a message based on contents of the message in case that the message is received in operation 605. For example, as described in FIG. 3 and FIG. 4 above, in case that a message is received, the processor 240 may acquire category information determined based on message contents from an artificial intelligence model (e.g., the artificial intelligence model 410 of FIG. 4). The processor 240 may identify the category information based on the contents of the message acquired from the artificial intelligence model 410.

In an embodiment, the processor 240 may identify whether an application related to the message is executed in operation 610. In case that the application related to the message is not executed (e.g., NO in operation 610), the processor 240 branches to operation 605, and may repeatedly perform an operation of identifying the category information of the message based on the contents of the received message in case that a message is received.

In an embodiment, in case that the application related to the message is executed (e.g., YES in operation 610), the processor 240 may, in operation 615, display, on a display (e.g., the display 230 of FIG. 2), information related to unread messages based on category information satisfying a predetermined condition among at least one piece of category information and a list of unread messages.

In an embodiment, the category information satisfying the predetermined condition among the at least one piece of category information may include at least one of category information having a largest number of unread messages, category information recently selected by a user, category information having a highest frequency of selection by the user, or category information having a highest frequency of selection by the user for each time period.

In an embodiment, the information related to the unread messages based on the category information satisfying the predetermined condition among the at least one piece of category information may include summary information related to unread messages classified into the category information satisfying the predetermined condition among the at least one piece of category information. For example, the summary information may include the number of unread messages classified into the category information satisfying the predetermined condition and/or the total number of unread messages. However, the present disclosure is not limited thereto.

In an embodiment, the list of unread messages may be displayed based on at least one of time information of a recently received message or sending information of a message.

In an embodiment, the processor 240 may identify whether a first user input for displaying an unread message is detected in operation 620. The first user input for displaying the unread message may include an input for displaying only unread messages (e.g., an input for selecting an object (or an item) for displaying only unread messages) detected in a state where a screen of the application related to the message is displayed on the display 230.

In an embodiment, in case that the first user input is not detected (e.g., NO in operation 620), the processor 240 branches to operation 615 and may continue to perform the operation of displaying, on the display 230, the information related to the unread messages based on the category information satisfying the predetermined condition and the list of the unread messages.

In an embodiment, in case that the first user input is detected (e.g., YES in operation 620), the processor 240 may, in operation 625, display, on the display 230, at least one object indicating at least one piece of category information, information related to at least one unread message mapped to the at least one piece of category information, and the list of the unread messages.

In an embodiment, the at least one object (or at least one indicator) indicating the at least one piece of category information may include one of an item, an icon, a text-type object, or an image-type object. However, the present disclosure is not limited thereto. In an embodiment, the information related to the at least one unread message mapped to the at least one piece of category information may include the number of unread messages classified into (or included in the at least one piece of category information) each of the at least one piece of category information. However, the present disclosure is not limited thereto.

In an embodiment, the processor 240 may identify whether a second user input for selecting one of the at least one object is detected in operation 630. In case that the second user input is not detected (e.g., NO in operation 630), the processor 240 branches to operation 625 and may continue to perform the operation of displaying, on the display 230, the at least one object indicating the at least one piece of category information, the information related to the at least one unread message mapped to the at least one piece of category information, and the list of the unread messages.

In an embodiment, in case that the second user input is detected (e.g., YES in operation 630), the processor 240 may display, on the display 230, at least one message mapped to the category information corresponding to the selected object in operation 635. The at least one message included in the second user interface may include at least one message classified based on the category information regardless of sending information of the at least one message.

In FIG. 6 according to various embodiments, it has been described that operation 615 is performed in case that the first user input is not detected, and operation 625 is performed in case that the second user input is not detected, but the present disclosure is not limited thereto. The processor 240 may also detect an input for terminating the application related to the message or an input for executing at least one other application. In this case, the processor 240 may terminate the operation of displaying the message based on the category of FIG. 6.

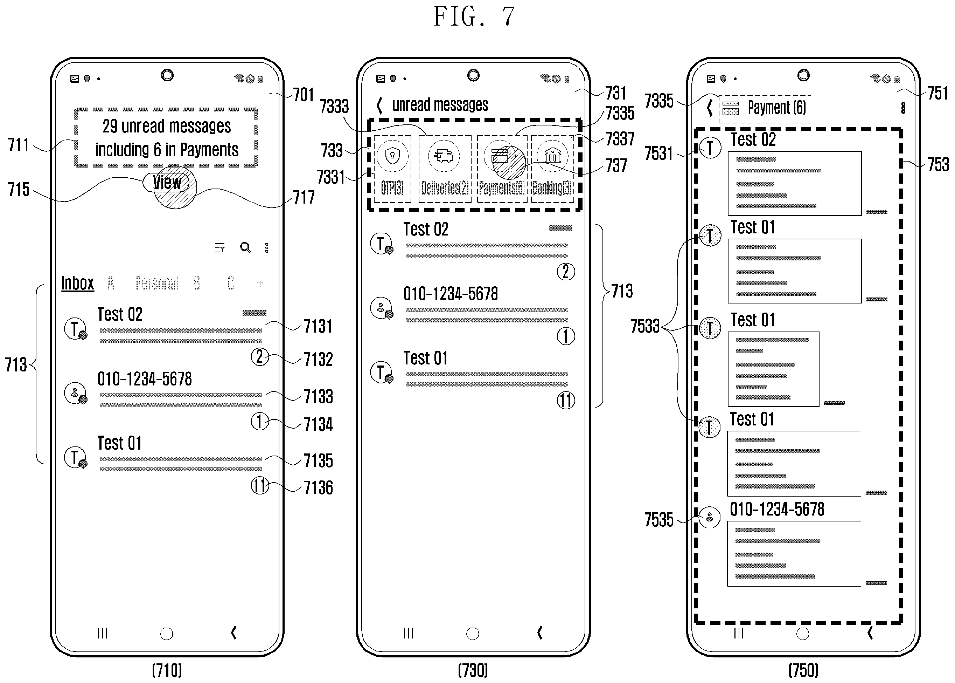

FIG. 7 is a view for explaining a method for displaying a message based on category information according to an embodiment of the present disclosure.

With reference to FIG. 7, a processor (e.g., the processor 240 of FIG. 2) of an electronic device (e.g., the electronic device 101 of FIG. 1 and/or FIG. 2) may display a screen 701 of an application related to a message on a display (e.g., the display 230 of FIG. 2) based on the application related to the message being executed, as illustrated in reference numeral <710>.

The screen 701 of the application related to the message according to an embodiment may include information 711 related to unread messages based on category information satisfying a predetermined condition among at least one piece of category information and a list 713 of unread messages.

In an embodiment, the category information satisfying the predetermined condition among the at least one piece of category information may include at least one of category information having a largest number of unread messages, category information recently selected by a user, category information having a highest frequency of selection by the user, or category information having a highest frequency of selection by the user for each time period.

In FIG. 7 according to various embodiments, the category information satisfying the predetermined condition among the at least one piece of category information will be described assuming that it is the category information having the largest number of unread messages. For example, as illustrated in reference numeral <710>, the processor 240 may display, on the display 230, the information related to the unread messages (e.g., information including the number of unread messages classified into the category information satisfying the predetermined condition and/or the total number of unread messages) based on the category information (e.g., payments) having the largest number of unread messages among the at least one piece of category information, for example, "29 unread messages including 6 in Payments" 711.

In an embodiment, the list 713 of unread messages may be displayed based on time information when the message was received and/or sending information. For example, the list 713 of unread messages may include a first group message 7131, a second group message 7133, and a third group message 7135. The first group message 7131 may include at least one message received from first sending information (e.g., Test 02) and/or at least one message transmitted to the first sending information (e.g., Test 02). The second group message 7133 may include at least one message received from second sending information (e.g., 010-1234-5678) and/or at least one message transmitted to the second sending information (e.g., 010-1234-5678). The third group message 7135 may include at least one message received from third sending information (e.g., Test 01) and/or at least one message transmitted to the third sending information (e.g., Test 01).

In an embodiment, the processor 240 may further display the number 7132, 7134, 7136 of unread messages for each of the first group message 7131, the second group message 7133, and the third group message 7135.

In an embodiment, the processor 240 may identify whether a first user input for displaying an unread message is detected. In an embodiment, the first user input for displaying the unread message may include an input 717 for selecting an object 715 for displaying the unread message. However, the present disclosure is not limited thereto.

In an embodiment, in case that the input 717 for selecting the object 715 for displaying the unread message is detected, the processor 240 may, as illustrated in reference numeral <730>, display, on the display 230, a user interface including at least one object (or at least one indicator) 733 indicating at least one piece of category information, information related to at least one unread message mapped to the at least one piece of category information, and the list 713 of unread messages.

In an embodiment, the at least one object (or at least one indicator) 733 indicating the at least one piece of category information may include a first object 7331 indicating first category information (e.g., security (OTP, one time password) category information), a second object 7333 indicating second category information (e.g., delivery category information), a third object 7335 indicating third category information (e.g., payments category information), and a fourth object 7337 indicating fourth category information (e.g., banking category information).

In an embodiment, the information related to the at least one unread message mapped to the at least one piece of category information may be displayed adjacent to each object (e.g., the first object 7331, the second object 7333, the third object 7335, and the fourth object 7337). For example, the information related to the at least one unread message mapped to the at least one piece of category information may include summary information related to unread messages classified into the at least one piece of category information. For example, the summary information may include the number of unread messages. However, the present disclosure is not limited thereto.

In an embodiment, the processor 240 may detect a second user input 737 for selecting the third object 7335 among the first object 7331, the second object 7333, the third object 7335, and the fourth object 7337. Based on the second user input 737 for selecting the third object 7335 being detected, the processor 240 may, as illustrated in reference numeral <750>, display, on the display 230, a user interface 751 including at least one message 753 mapped to (or classified into the third category information 7335 (e.g., payments category information)) the third category information 7335 (e.g., payments category information) corresponding to the selected third object 7335. The at least one message 753 included in the user interface 751 may include at least one message having the third category information 7335 regardless of sending information (e.g., Test 02 7531, Test 01 7533, and 010-1234-5678 7535) of the at least one message.

As described in FIG. 3 to FIG. 7 according to various embodiments, the electronic device 101 may provide a user experience that allows a user to easily identify what category information an unread message is, by providing information related to unread messages classified based on category information together with the category information. In addition, the electronic device 101 may also provide a user experience in which unread messages classified into specific category information may be identified at once, by providing the unread messages classified into the selected specific category information according to selecting the specific category information.

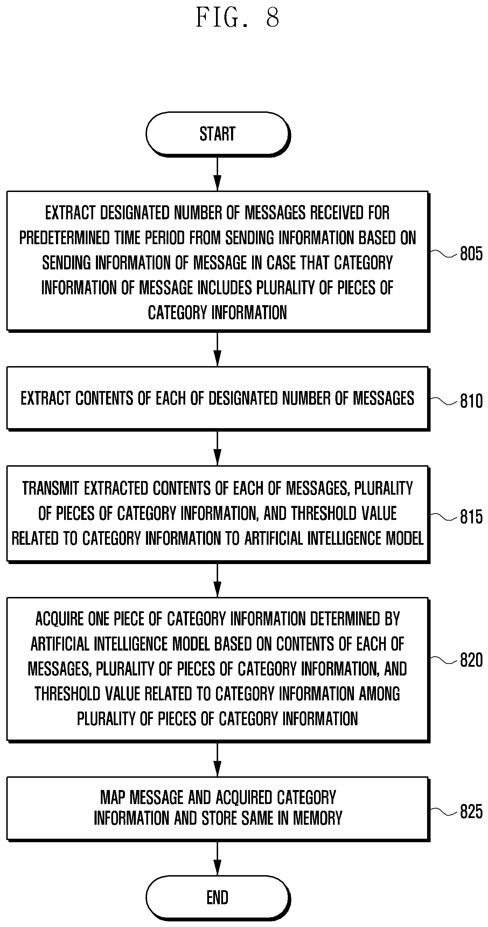

FIG. 8 is a flowchart for explaining a method for classifying a message in case that there are a plurality of pieces of category information based on contents of the message according to an embodiment of the present disclosure.

In the following embodiments, each of the operations of FIG. 8 may be performed sequentially, but are not necessarily performed sequentially. For example, the order of each of the operations of FIG. 8 may be changed, and at least two operations may be performed in parallel.

According to an embodiment, operation 805 to operation 825 of FIG. 8 may be understood as being performed by a processor (e.g., the processor 240 of FIG. 2) of an electronic device (e.g., the electronic device 101 of FIG. 1 and/or FIG. 2).

With reference to FIG. 8, in operation 805, in case that the category information of the message includes a plurality of pieces of category information, the processor 240 may extract a designated number of messages received for a predetermined time period from sending information based on the sending information of the message. For example, the processor 240 may receive a plurality of pieces of category information based on the contents of the message from an artificial intelligence model (e.g., the artificial intelligence model 410 of FIG. 4). For example, the plurality of pieces of category information based on the contents of the message may include category information having a highest probability value, and at least one piece of category information having a difference within a first designated value (e.g., about 0.1) from the category information having the highest probability value. The plurality of pieces of category information based on the contents of the message may include a first number of category information. In case of receiving the first number of category information based on the contents of the message from the artificial intelligence model 410, the processor 240 may extract the designated number of messages received for the predetermined time period from the sending information based on the sending information of the message.

In an embodiment, the processor 240 may calculate a difference in probability value between the first number of category information. For example, the processor 240 may extract (or screen) category information having the highest probability value, and at least one piece of category information having a difference within a second designated value (e.g., about 0.03) from the category information having the highest probability value, based on the plurality of pieces of category information included in the first number of category information.

In an embodiment, in case that the at least one piece of category information having a difference within the second designated value (e.g., about 0.03) from the category information having the highest probability value is extracted based on the plurality of pieces of category information included in the first number of category information, the processor 240 may extract the designated number of messages received for the predetermined time period from the sending information of the message. For example, the processor 240 may extract a plurality of first messages having the same sending information (e.g., telephone number information, email address information, name information) as the message. As another example, the processor 240 may extract a plurality of second messages received during a predetermined time period (e.g., 30 days) among the plurality of first messages. As yet another example, the processor 240 may extract a designated number (e.g., up to 50) of messages among the plurality of second messages.

In an embodiment, the processor 240 may extract contents of each of the designated number of messages in operation 810. For example, the contents of each of the messages may include at least one of text, an image, a video, an icon, or an emoticon (or emoji).

In an embodiment, the processor 240 may transmit the extracted contents of each of the messages, the plurality of pieces of category information, and a threshold value related to category information to the artificial intelligence model 410 in operation 815.

In an embodiment, the plurality of pieces of category information may include the category information having the highest probability value described in operation 805 above, and at least one piece of category information having a difference within the second designated value (e.g., about 0.03) from the category information having the highest probability value.

In an embodiment, the threshold value related to the category information may mean a threshold value for determining one piece of category information among the plurality of pieces of category information based on the contents of the message.

In an embodiment, the processor 240 may acquire one piece of category information determined by the artificial intelligence model 410 based on the contents of each of the messages, the plurality of pieces of category information, and the threshold value related to the category information among the plurality of pieces of category information in operation 820.

In an embodiment, the artificial intelligence model 410 may determine at least one piece of category information corresponding to (or similar to) the contents of each of the messages based on the contents of each of the messages received from the processor 240. The artificial intelligence model 410 may determine one piece of category information among the determined at least one piece of category information based on the threshold value related to the category information. For example, the artificial intelligence model 410 may calculate a probability value between the contents of each of the messages and the at least one piece of category information. The artificial intelligence model 410 may determine one piece of category information having a probability value equal to or greater than the threshold value (or one piece of category information having a probability value exceeding the threshold value) among the calculated probability values between the contents of each of the messages and each of the at least one piece of category information.

In an embodiment, the artificial intelligence model 410 may perform an operation of summing the probability values of each of the determined at least one piece of category information. For example, the artificial intelligence model 410 may perform an operation of summing the probability values of each of the same category information among the determined at least one piece of category information. The artificial intelligence model 410 may determine one piece of category information having a maximum value among the summed probability values of each of the same category information. The artificial intelligence model 410 may transmit the determined one piece of category information to the processor 240. The present disclosure is not limited thereto, and the artificial intelligence model 410 may transmit the probability value of the determined one piece of category information to the processor 240 together with the determined one piece of category information.

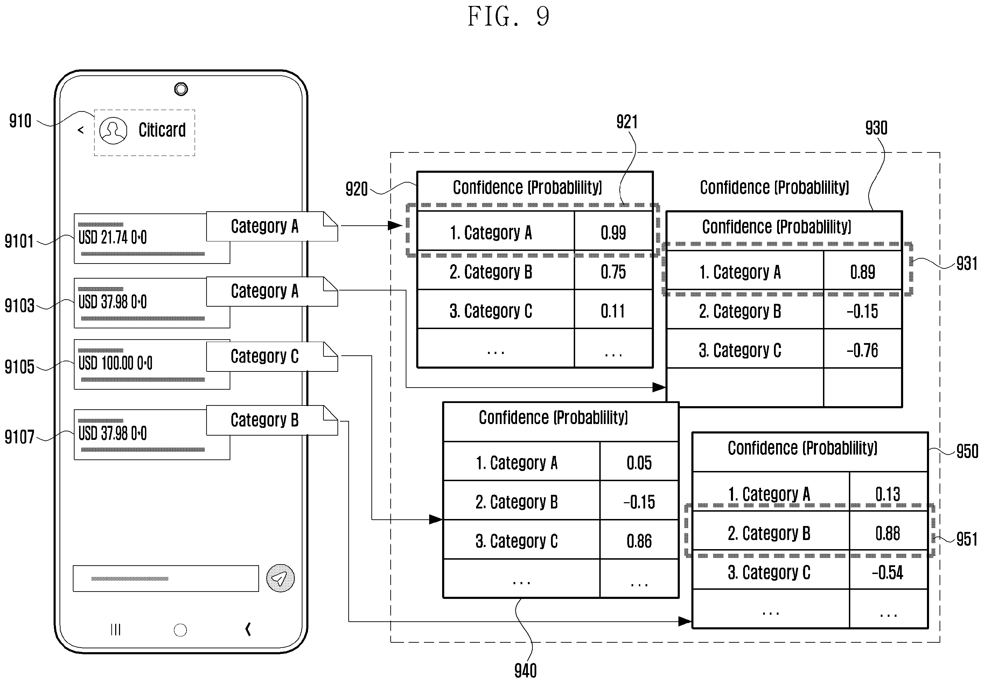

Regarding operation 815 and operation 820 described above, it will be described in more detail in FIG. 9 to be described later.

In an embodiment, the processor 240 may map the message and the acquired category information and store the same in a memory (e.g., the memory 220 of FIG. 2) in operation 825.

In an embodiment, although not illustrated, the memory 220 (or an application related to the message) may include a first DB for storing the received message and a second DB for storing message information classified based on the category information (e.g., category information mapped to the received message). The processor 240 may store the message and the acquired category information in the second DB of the memory 220.

FIG. 9 is a view for explaining a method for classifying a message in case that there are a plurality of pieces of category information based on contents of the message according to an embodiment of the present disclosure.

With reference to FIG. 9, in case of receiving a plurality of pieces of category information based on message contents from an artificial intelligence model (e.g., the artificial intelligence model 410 of FIG. 4), a processor (e.g., the processor 240 of FIG. 2) of an electronic device (e.g., the electronic device 101 of FIG. 1 and/or FIG. 2) may determine (or extract, screen) category information having a highest probability value, and at least one piece of category information having a difference within a first designated value (e.g., about 0.1) from the category information having the highest probability value. For example, as described in FIG. 4, among a probability value 4303 (or a confidence value) between the contents of the message and determined at least one piece of category information 4301 (e.g., first category information (e.g., category A), second category information (e.g., category B), and third category information (e.g., category C)) (e.g., a probability value (e.g., 0.99) of the first category information (e.g., category A), a probability value (e.g., 0.97) of the second category information (e.g., category B), and a probability value (e.g., 0.85) of the third category information (e.g., category C)), a first number of category information (e.g., the second category information (e.g., category B)) having a difference within the first designated value (e.g., 0.1) from the category information having a highest probability value (e.g., the first category information (e.g., category A)) may be determined (or extract, screen).

In an embodiment, the processor 240 may calculate a difference in probability value between the first number of category information (e.g., the first category information (e.g., category A) and the second category information (e.g., category B)). For example, the processor 240 may identify whether the first category information (e.g., category A) and the second category information (e.g., category B) included in the first number of category information have a difference within a second designated value (e.g., about 0.03).

In an embodiment, in case that the first category information (e.g., category A) and the second category information (e.g., category B) have a difference within the second designated value (e.g., about 0.03), the processor 240 may define two pieces of category information (e.g., the first category information (e.g., category A) and the category information (e.g., category B)) having a difference within the second designated value (e.g., about 0.03) as a category information candidate list.

In an embodiment, in case that the first category information (e.g., category A) and the second category information (e.g., category B) included in the first number of category information have a difference within the second designated value (e.g., about 0.03), the processor 240 may extract a designated number (e.g., up to 50) of messages (e.g., a first message 9101, a second message 9103, a third message 9105, a fourth message 9107) received for a predetermined time period (e.g., about 30 days) from sending information 910 of a message (e.g., CitiCard).

In an embodiment, the processor 240 may transmit the extracted contents of each of the messages, a plurality of pieces of category information (e.g., the first category information (e.g., category A) and the second category information (e.g., category B)) (e.g., the category information candidate list), and a threshold value related to category information to the artificial intelligence model 410.

In an embodiment, as illustrated in FIG. 9, the artificial intelligence model 410 may determine at least one piece of category information corresponding to (or similar to) the contents of each of the messages based on the contents of each of the messages received from the processor 240.

For example, the artificial intelligence model 410 may determine at least one piece of category information (e.g., first category information (e.g., category A), second category information (e.g., category B), and third category information (e.g., category C)) based on the contents of the first message 9101. The artificial intelligence model 410 may calculate a probability value 920 (e.g., a probability value (e.g., 0.99) of the first category information (e.g., category A), a probability value (e.g., 0.75) of the second category information (e.g., category B), and a probability value (e.g., 0.11) of the third category information (e.g., category C)) between the contents of the first message 9101 and each of the determined at least one piece of category information (e.g., the first category information (e.g., category A), the second category information (e.g., category B), and the third category information (e.g., category C)).

As another example, the artificial intelligence model 410 may determine at least one piece of category information (e.g., first category information (e.g., category A), second category information (e.g., category B), and third category information (e.g., category C)) based on the contents of the second message 9103. The artificial intelligence model 410 may calculate a probability value 930 (e.g., a probability value (e.g., 0.89) of the first category information (e.g., category A), a probability value (e.g., -0.15) of the second category information (e.g., category B), and a probability value (e.g., -0.76) of the third category information (e.g., category C)) between the contents of the second message 9103 and each of the determined at least one piece of category information (e.g., the first category information (e.g., category A), the second category information (e.g., category B), and the third category information (e.g., category C)).

As yet another example, the artificial intelligence model 410 may determine at least one piece of category information (e.g., first category information (e.g., category A), second category information (e.g., category B), and third category information (e.g., category C)) based on the contents of the third message 9105. The artificial intelligence model 410 may calculate a probability value 940 (e.g., a probability value (e.g., 0.05) of the first category information (e.g., category A), a probability value (e.g., -0.15) of the second category information (e.g., category B), and a probability value (e.g., 0.86) of the third category information (e.g., category C)) between the contents of the third message 9105 and each of the determined at least one piece of category information (e.g., the first category information (e.g., category A), the second category information (e.g., category B), and the third category information (e.g., category C)).

As yet another example, the artificial intelligence model 410 may determine at least one piece of category information (e.g., first category information (e.g., category A), second category information (e.g., category B), and third category information (e.g., category C)) corresponding to (or similar to) the contents of the fourth message 9107. The artificial intelligence model 410 may calculate a probability value 950 (e.g., a probability value (e.g., 0.13) of the first category information (e.g., category A), a probability value (e.g., 0.88) of the second category information (e.g., category B), and a probability value (e.g., -0.54) of the third category information (e.g., category C)) between the contents of the fourth message 9107 and each of the determined at least one piece of category information (e.g., the first category information (e.g., category A), the second category information (e.g., category B), and the third category information (e.g., category C)).

In an embodiment, the artificial intelligence model 410 calculates the probability values 920, 930, 940, 950 between the contents of each of the messages (e.g., the first message 9101, the second message 9103, the third message 9105, the fourth message 9107) and each of the at least one piece of category information (e.g., the first category information (e.g., category A), the second category information (e.g., category B), and the third category information (e.g., category C)), and may determine one piece of category information having a probability value equal to or greater than a threshold value (or one piece of category information having a probability value exceeding the threshold value) among the calculated probability values.

In an embodiment, the artificial intelligence model 410 may perform an operation of summing the probability values of each of the same category information among the determined at least one piece of category information. For example, assuming that the threshold value is about 0.8, the artificial intelligence model 410 may perform an operation of summing the probability values of each of the same category information having a probability value equal to or greater than the threshold value. For example, the artificial intelligence model 410 may calculate the final probability value of the first category information (e.g., category A) of the first message 9101 as "1.88" by performing an operation of summing "0.99" 921, which is the probability value of the first category information (e.g., category A) of the first message 9101 having a probability value equal to or greater than the threshold value (e.g., about 0.8), and "0.89" 931, which is the probability value of the first category information (e.g., category A) of the second message 9103. As another example, there may be only one probability value, "0.88", of the second category information (e.g., category B) of the fourth message 9107 having a probability value equal to or greater than the threshold value (e.g., about 0.8). In this case, the artificial intelligence model 410 may determine the final probability value of the second category information (e.g., category B) of the fourth message 9107 as "0.88" 951.

In an embodiment, the artificial intelligence model 410 may determine one piece of category information having a maximum value among the summed probability values of each of the same category information. For example, it may be identified that the final probability value of the first category information (e.g., category A) is "1.88" and the final probability value of the second category information (e.g., category B) is "0.88", so that the final probability value of the first category information (e.g., category A) has the maximum value. The artificial intelligence model 410 may transmit the first category information (e.g., category A), which is the one piece of category information having the maximum value, to the processor 240.

In an embodiment, in case that the first category information (e.g., category A), which is the one piece of category information having the maximum value, is included in the category information candidate list (e.g., the first category information (e.g., category A) and the second category information (e.g., category B)), the artificial intelligence model 410 may finally determine the first category information (e.g., category A) as the category information of the message.

In an embodiment, the processor 240 may acquire, by the artificial intelligence model 410, one piece of category information determined based on the contents of each of the messages and the threshold value related to the category information among the plurality of pieces of category information.

In an embodiment, the processor 240 may map the message and the first category information (e.g., category A) acquired from the artificial intelligence model 410 and store the same in a memory (e.g., the memory 220 of FIG. 2) (or a database of an application related to the message).

As described in FIG. 8 and FIG. 9 according to various embodiments, in case that the category information of the message includes a plurality of pieces of category information, the electronic device 101 may determine the category information of each message based on the contents of each of the designated number of messages received for a predetermined time period from the sending information of the message, and determine one piece of category information based on the probability value between the contents and the category information of each message. Even in case that the category information based on the contents of the message includes a plurality of pieces of category information, the electronic device 101 provides one piece of category information close to the contents of the message and information related to unread messages classified based on the one piece of category information, thereby providing a user experience that allows the user to easily identify what category information the unread message is.

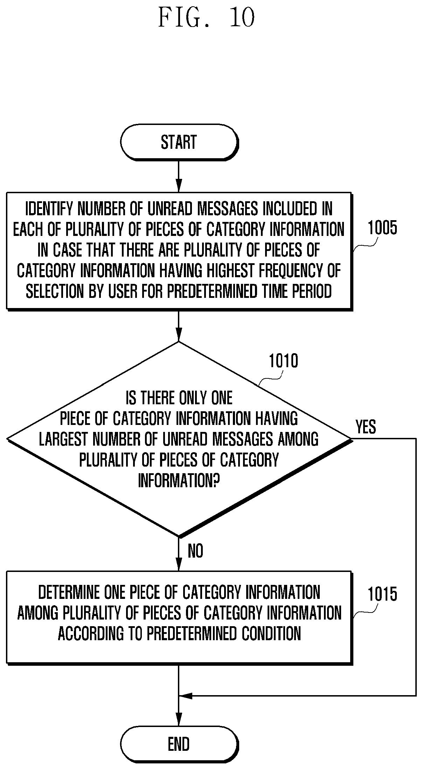

FIG. 10 is a flowchart for explaining a method for determining one piece of category information satisfying a predetermined condition in case that a plurality of pieces of category information satisfy the predetermined condition among at least one piece of category information based on contents of a message according to an embodiment of the present disclosure.

In the following embodiments, each of the operations of FIG. 10 may be performed sequentially, but are not necessarily performed sequentially. For example, the order of each of the operations of FIG. 10 may be changed, and at least two operations may be performed in parallel.

According to an embodiment, operation 1005 to operation 1015 of FIG. 10 may be understood as being performed by a processor (e.g., the processor 240 of FIG. 2) of an electronic device (e.g., the electronic device 101 of FIG. 1 and/or FIG. 2).

FIG. 10 according to various embodiments is a view for explaining a method for determining category information satisfying a predetermined condition among at least one piece of category information in operation 615 described above.

In an embodiment, the category information satisfying the predetermined condition among the at least one piece of category information may include at least one of category information having a largest number of unread messages, category information recently selected by a user, category information having a highest frequency of selection by the user, or category information having a highest frequency of selection by the user for each time period.

The category information satisfying the predetermined condition in FIG. 10 according to various embodiments will be described assuming that it is the category information having the highest frequency of selection by the user and the category information having the largest number of unread messages.

With reference to FIG. 10, in operation 1005, in case that there are a plurality of pieces of category information having the highest frequency of selection by the user for a predetermined time period, the processor 240 may identify the number of unread messages included in each of the plurality of pieces of category information.

In an embodiment, the processor 240 may identify whether there is only one piece of category information having the largest number of unread messages among the plurality of pieces of category information in operation 1010. In case that there is only one piece of category information having the largest number of unread messages among the plurality of pieces of category information (YES in operation 1010), the processor 240 terminates the operation of FIG. 10. For example, in case that there is only one piece of category information having the largest number of unread messages among the plurality of pieces of category information, the processor 240 may display, on a display (e.g., the display 230 of FIG. 2), information related to unread messages based on the category information having the largest number of unread messages and a list of unread messages.

In an embodiment, the information related to the unread messages based on the category information having the largest number of unread messages may include the number of unread messages. However, the present disclosure is not limited thereto.

In an embodiment, in case that there is not only one piece of category information having the largest number of unread messages among the plurality of pieces of category information (NO in operation 1010), the processor 240 may determine one piece of category information among the plurality of pieces of category information according to a predetermined condition in operation 1015. For example, the predetermined condition may include category information satisfying at least one of category information recently selected by the user or category information having a highest frequency of selection by the user for each time period among the plurality of pieces of category information. In case that there are a plurality of pieces of category information having the largest number of unread messages among the plurality of pieces of category information, the processor 240 may determine one piece of category information based on at least one of the category information recently selected by the user or the category information having the highest frequency of selection by the user for each time period. Although not illustrated, the processor 240 may display, on the display 230, information related to unread messages based on the determined one piece of category information and the list of the unread messages.

In an embodiment, the information related to the unread messages based on the determined one piece of category information may include the number of unread messages. However, the present disclosure is not limited thereto.

As described in FIG. 10 according to various embodiments, before providing the information related to the unread messages classified based on the category information together with the category information, the electronic device 101 may provide the user with information related to the unread messages based on the category information satisfying the predetermined condition according to the user's situation or pattern. Accordingly, the user may intuitively identify the category information to be identified among the at least one piece of category information and the information related to the unread messages classified into the category information.

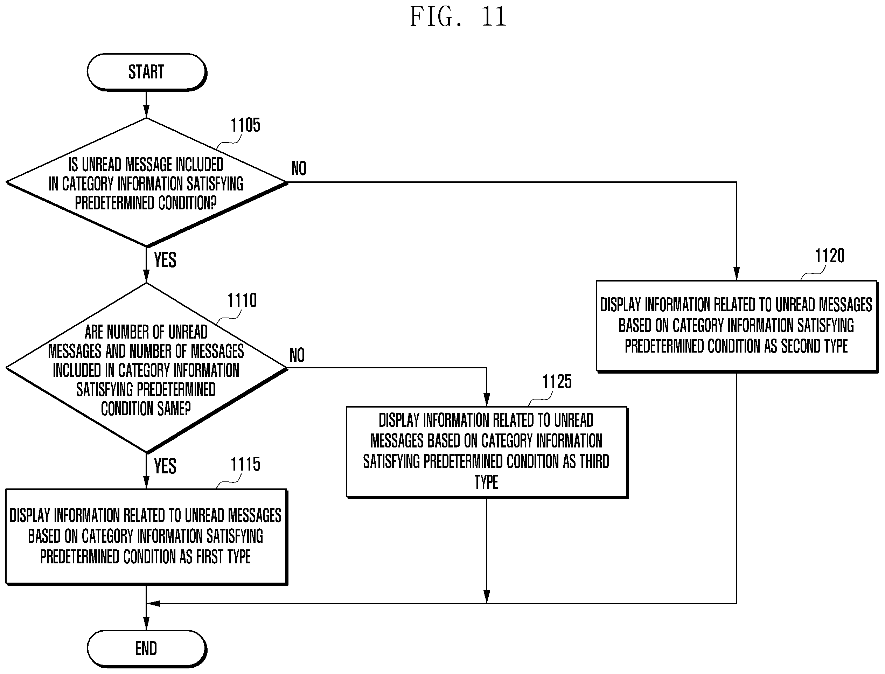

FIG. 11 is a flowchart for explaining a method for displaying information related to unread messages based on category information satisfying a predetermined condition according to an embodiment of the present disclosure.

In the following embodiments, each of the operations of FIG. 11 may be performed sequentially, but are not necessarily performed sequentially. For example, the order of each of the operations of FIG. 11 may be changed, and at least two operations may be performed in parallel.

According to an embodiment, operation 1105 to operation 1125 of FIG. 11 may be understood as being performed by a processor (e.g., the processor 240 of FIG. 2) of an electronic device (e.g., the electronic device 101 of FIG. 1 and/or FIG. 2).

FIG. 11 according to various embodiments is a view for explaining a method for displaying information related to unread messages based on the category information satisfying the predetermined condition in operation 615 described above.

With reference to FIG. 11, the processor 240 may identify whether an unread message is included in category information satisfying a predetermined condition in operation 1105.

In an embodiment, the category information satisfying the predetermined condition among the at least one piece of category information may include one of category information having a largest number of unread messages, category information recently selected by a user, category information having a highest frequency of selection by the user, or category information having a highest frequency of selection by the user for each time period.

In an embodiment, in case that the unread message is included in the category information satisfying the predetermined condition (YES in operation 1105), the processor 240 may identify whether the number of unread messages and the number of messages included in the category information satisfying the predetermined condition are the same in operation 1110. In case that the number of unread messages and the number of messages included in the category information satisfying the predetermined condition are the same (YES in operation 1110), the processor 240 may display the information related to the unread messages based on the category information satisfying the predetermined condition as a first type (e.g., N unread messages of category A (N is an integer)) in operation 1115.

In an embodiment, in case that the unread message is not included in the category information satisfying the predetermined condition (NO in operation 1105), the processor 240 may display the information related to the unread messages based on the category information satisfying the predetermined condition as a second type (e.g., N unread messages (N is an integer)) in operation 1120.

In an embodiment, in case that the number of unread messages and the number of messages included in the category information satisfying the predetermined condition are not the same (NO in operation 1110), the processor 240 may display the information related to the unread messages based on the category information satisfying the predetermined condition as a third type (e.g., N unread messages including M category A (N and M are integers)) in operation 1125.

As described in FIG. 11 according to various embodiments, the electronic device 101 may provide the information related to the unread messages based on the category information satisfying the predetermined condition in various types (e.g., the first type, the second type, and the third type) depending on whether the unread message is included in the category information satisfying the predetermined condition and/or whether the number of unread messages and the number of messages included in the category information satisfying the predetermined condition are the same. Accordingly, the user may intuitively identify the information related to the unread messages based on the category information satisfying the predetermined condition provided in various types according to each situation.

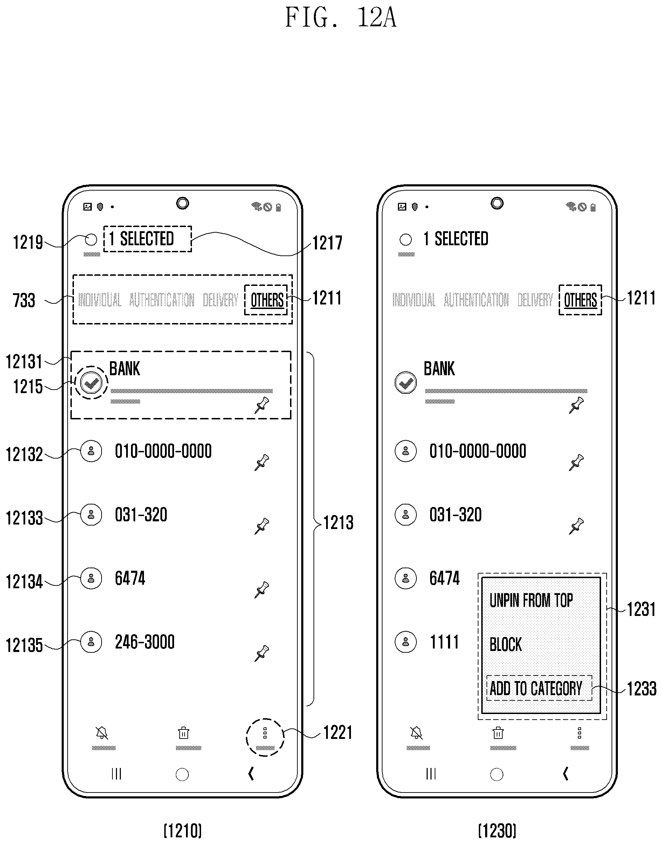

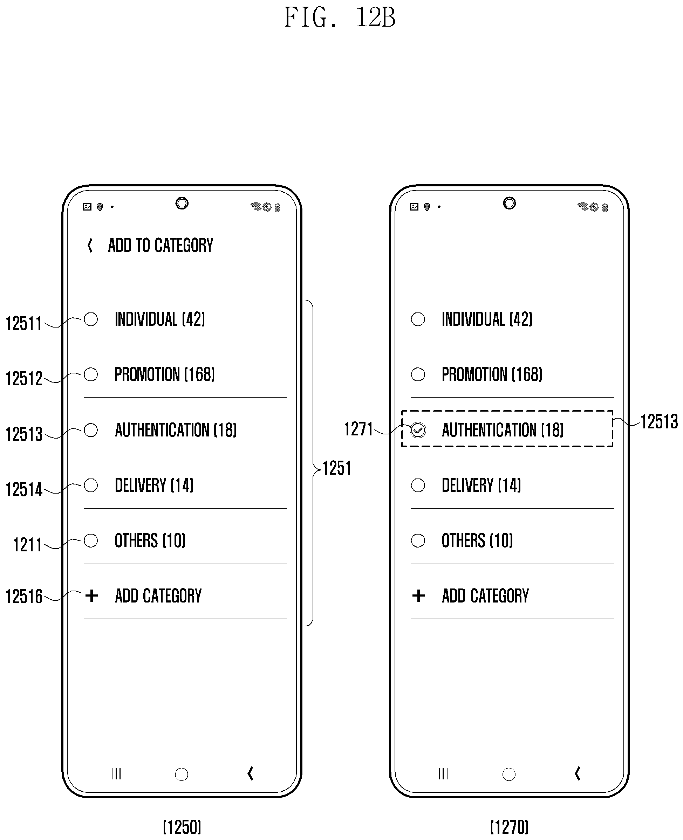

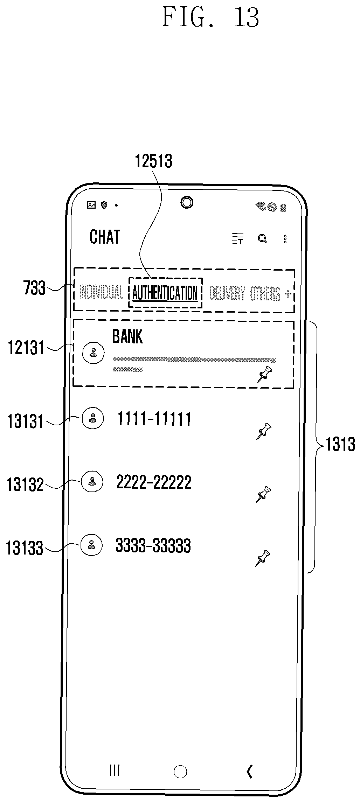

FIG. 12A, FIG. 12B, and FIG. 13 are views for explaining a method for changing category information of a message according to an embodiment of the present disclosure.

As described in FIG. 3 and FIG. 4 according to various embodiments, in case that a message is received, a processor (e.g., the processor 240 of FIG. 2) of an electronic device (e.g., the electronic device 101 of FIG. 1 and/or FIG. 2) may acquire category information determined based on message contents from an artificial intelligence model (e.g., the artificial intelligence model 410 of FIG. 4). The processor 240 may identify the category information based on the contents of the message acquired from the artificial intelligence model 410. For example, the category information may include promotion, service provider, bank, payment, shopping, reservation, delivery, family, friend, work, reminder, and/or other. However, the present disclosure is not limited thereto.

FIG. 12A and FIG. 12B to be described later according to various embodiments are views for explaining a method for changing category information of a message (e.g., an unread message) classified as "other" in case that the message (e.g., an unread message) is classified into the category information "other".

In an embodiment, a message (e.g., an unread message) classified into the category information "other" may include a message not classified into other category information such as promotion, service provider, bank, payment, shopping, reservation, delivery, family, friend, work, and reminder.

In an embodiment, in case that a first user input for displaying an unread message is detected, a user interface including at least one object (or at least one indicator) 733 indicating at least one piece of category information, information related to at least one unread message mapped to the at least one piece of category information, and a list of unread messages may be displayed on a display (e.g., the display 230 of FIG. 2).

With reference to FIG. 12A and FIG. 12B, based on an input for selecting an object indicating the category information "other" 1211 among the at least one object (or at least one indicator) 733 indicating the at least one piece of category information displayed on the user interface being detected, the processor 240 may display, on the display 230, a user interface including a list 1213 of unread messages (e.g., a first message 12131, a second message 12132, a third message 12133, a fourth message 12134, and a fifth message 12135) classified into the category information "other" 1211, as illustrated in reference numeral <1210> of FIG. 12A.

In an embodiment, the processor 240 may detect an input for selecting the first message 12131 (or an item indicating the first message 12131) in the list 1213 of unread messages (e.g., the first message 12131, the second message 12132, the third message 12133, the fourth message 12134, and the fifth message 12135) classified into the category information "other" 1211. Based on detecting the input for selecting the first message 12131, the processor 240 may display, on the display 230, information indicating that the first message 12131 is selected. The information indicating that the first message 12131 is selected may include an icon 1215 and/or text information 1217 (e.g., 1 selected) indicating that the first message 12131 is selected. In an embodiment, the processor 240 may further display, on the display 230, an object 1219 capable of selecting all of the first message 12131, the second message 12132, the third message 12133, the fourth message 12134, and the fifth message 12135 included in the list 1213 of unread messages classified into the category information "other" 1211.

In an embodiment, based on the input for selecting the first message 12131 being detected, the processor 240 may display at least one menu corresponding to at least one function related to the unread message. For example, the at least one function related to the unread message may include a notification function, a delete function, a pin function, a block function, and an add to (or change) category function of the unread message. However, the present disclosure is not limited thereto. For example, in case that an input for selecting a "more" object 1221 (e.g., an object for displaying at least one function related to an unread message not displayed on the display 230) is detected, the processor 240 may display, on the display 230, a pop-up window 1231 including at least one function related to the unread message that was not displayed on the display 230, as illustrated in reference numeral <1230> of FIG. 12A. In case that an input for selecting the add to category function 1233 (or an item indicating the add to category function 1233) is detected in the pop-up window 1231, the processor 240 may display a category information list 1251 on the display 230, as illustrated in reference numeral <1250> of FIG. 12B. The category information list 1251 may include items indicating category information (e.g., individual 12511, promotion 12512, authentication 12513, delivery 12514, and other 1211) and an item 12516 (e.g., add category) capable of adding category information. The category information displayed in the category information list 1251 may include at least one piece of category information mapped to an unread message currently within the electronic device 101.

In an embodiment, the processor 240 may detect an input for selecting specific category information, for example, authentication 12513 (or an item indicating authentication 12513), in the category information list 1251. In case that the input for selecting the authentication 12513, which is the specific category information, is detected, the processor 240 may display, on the display 230, an object 1271 indicating that the authentication 12513 is selected. Based on the input for selecting the authentication 12513, which is the specific category information, being detected, the processor 240 may change the first message 12131, which was classified as the category information "other" 1211, to the category information "authentication" 12513. In other words, the processor 240 may classify the first message 12131 into the category information "authentication" 12513. For example, based on an input for selecting the category information "authentication" 1311 among the at least one object (or at least one indicator) 733 indicating the at least one piece of category information being detected, the processor 240 may display, on the display 230, a list 1313 of unread messages classified into the category information "authentication" 12513, as illustrated in FIG. 13. A user interface including the category information "authentication" 12513 (e.g., the first message 12131, a sixth message 13131, a seventh message 13132, and an eighth message 13133) may be displayed on the display 230.

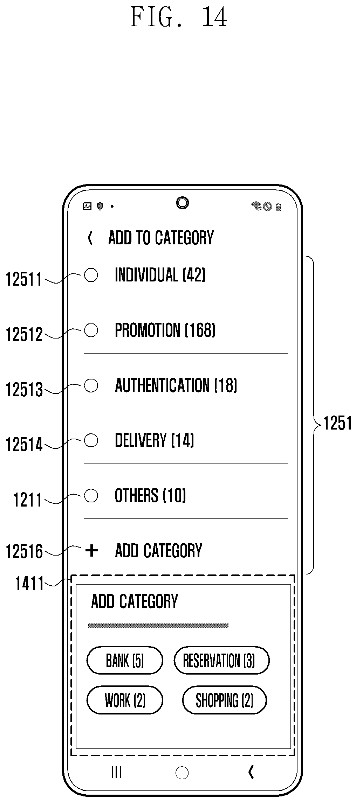

FIG. 14 is a view for explaining a method for adding category information for classifying a message according to an embodiment of the present disclosure.

As described in FIG. 12B according to various embodiments, a processor (e.g., the processor 240 of FIG. 2) of an electronic device (e.g., the electronic device 101 of FIG. 1 and/or FIG. 2) may display a category information list 1251 on a display (e.g., the display 230 of FIG. 2). For example, the category information list 1251 may include items indicating category information (e.g., individual 12511, promotion 12512, authentication 12513, delivery 12514, and other 1211) and an item 12516 (e.g., add category) capable of adding category information.

With reference to FIG. 14, the processor 240 may detect an input for selecting the item 12516 (e.g., add category) capable of adding category information in the category information list 1251. In case that the input for selecting the item 12516 capable of adding category information is detected, the processor 240 may display, on the display 230, a user interface capable of adding category information. For example, the processor 240 may display, on the display 230, a user interface 1411 including predefined category information (e.g., bank, reservation, work, and/or shopping). In this case, in case that category information is selected in the user interface 1411, the processor 240 may create (or generate) the selected category information as new category information.

The present disclosure is not limited thereto, and in case that an input for selecting the item 12516 capable of adding category information is detected, the processor 240 may also display, on the display 230, a user interface on which a user may enter category information. In this case, the user may directly enter the category information, and the processor 240 may create the category information created based on the user input as new category information.

In an embodiment, the category information of the message may be user-designated category information. In this case, in case of determining the category information of an unread message having high probability (or similarity) with the message (e.g., a message having a probability equal to or greater than a designated probability value for sending information and/or message contents), the artificial intelligence model (e.g., the artificial intelligence model 410 of FIG. 4) may determine the category information of the unread message by giving a weight to the user-designated category information.

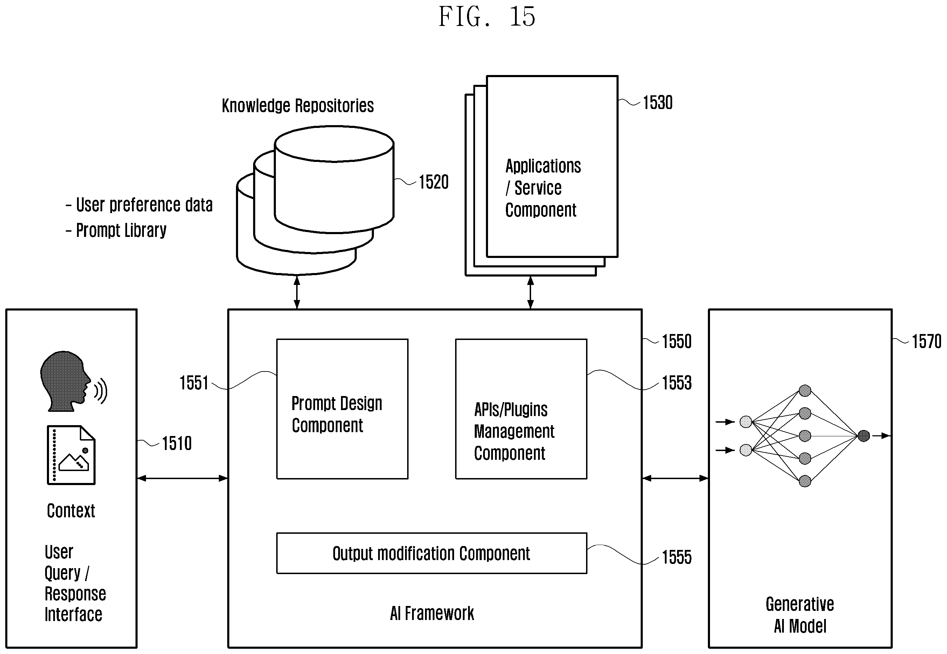

FIG. 15 is a block diagram illustrating a generative artificial intelligence system according to an embodiment of the present disclosure.

With reference to FIG. 15, a generative artificial intelligence system according to an embodiment may include a user query/response interface 1510, knowledge repositories 1520, an applications/service component 1530, an AI framework 1550, and/or a generative AI model 1570 (e.g., the artificial intelligence model 410 of FIG. 4).

In an embodiment, the user query/response interface 1510 may receive a user input. The user input may be in a form such as natural language, an image, and/or a video. In an embodiment, in case of transmitting the user input, context information may be transmitted together. The context information may include various additional information at the time point of receiving the user input. For example, the context information may include information on an application currently being used by the user and/or user location information. In an embodiment, the user input may also be in a mixed form of natural language, an image, sound, and context information. The present disclosure is not limited thereto, and the user input may also be in a non-natural language form such as selecting a menu.

In an embodiment, the user query/response interface 1510 may output a result of the generative artificial intelligence system to the user. The output may be provided in a natural language form or a specific content form. The present disclosure is not limited thereto, and the output may also be provided in the form of an action requested by the user.

In an embodiment, the AI framework 1550 may receive the user input, and coordinate and control each component required to perform a user intention based on the user input.

In an embodiment, the AI framework 1550 may include a prompt design component 1551, an APIs/Plugins Management component 1553, and/or an output modification component 1555 (or a refiner component).

In an embodiment, the user input received from the user query/response interface 1510 may be transmitted to the prompt design component 1551. The prompt design component 1551 may be used to create a prompt suitable for inputting the user input into a large language model (LLM) or large multimodal models (LMM). The prompt design component 1551 may include an AI component that uses a machine learning algorithm or a neural network to develop better prompts over time. The prompt design component 1551 may create a prompt by accessing a knowledge repository 1520 (or a knowledge component) including user preference data, a prompt library, and prompt examples, and transmit it to the large language model (LLM) or the large multimodal models (LMM).

In an embodiment, in case that there is a request for additional information when transmitting the user input as an input of the generative AI model 1570 (e.g., the artificial intelligence model 410 of FIG. 4), the APIs/Plugins Management component 1553 may perform a role of communicating with external information. The APIs/Plugins Management component 1553 builds a channel capable of communicating with the outside of an AI interface through an API (application programming interface), and may allow access to various data sources through the built channel. In addition, in case that an action for finally performing the user input, rather than an intermediate result, needs to be performed in an application or service, the APIs/Plugins Management component 1553 may request the corresponding action through the API. Information secured from the outside may be used to create a prompt in the prompt design component 1551 together with the user input, and may be transmitted as an input of the generative AI model 1570.

In an embodiment, the output modification component 1555 may finely tune the result output from the generative AI model 1570. For example, the output modification component 1555 may verify whether contents created through the large language model (LLM) and/or the large multimodal models (LMM) are irrelevant, include biased contents, and/or include harmful contents. In addition, the output modification component 1555 may determine how much the result matches the output desired by the user, and if an additional process is required, perform the corresponding process. The output modification component 1555 may additionally configure and provide the user with hints to avoid unwanted output.

In an embodiment, the generative AI model 1570 (e.g., the artificial intelligence model 410 of FIG. 4) may generally mean an artificial intelligence neural network that creates a new form of data depending on user input information. Models for creating an image may typically include a generative adversarial network (GAN) and a variational auto encoder (VAE), and recently, a Diffusion-based generative model using a VAE and a Transformer structure may be cited as an example of a generative model. In addition, a model for creating language is a model trained to output a statistically most appropriate output value based on an input value, and typically, models such as CHAT-GPT 3 and CHAT-GPT 4 may be cited as examples. In addition, the model for creating language may include LMMs (large multimodal models) capable of recognizing various forms of data input such as characters, images, and/or voices, and creating new data corresponding thereto.

A category-based message display method according to an embodiment of the present disclosure may include an operation of identifying category information of a message based on contents of the message in case that the message is received. The category-based message display method according to an embodiment may include an operation of displaying, on a display 230, a first user interface including information related to unread messages based on category information satisfying a predetermined condition among at least one piece of category information and a list of the unread messages in case that an input for executing an application related to the message is detected. The category-based message display method according to an embodiment may include an operation of displaying, on the display 230, a second user interface including at least one object indicating the at least one piece of category information, information related to at least one unread message mapped to the at least one piece of category information, and the list of the unread messages in case that a first user input for displaying an unread message is detected. The category-based message display method according to an embodiment may include an operation of displaying, on the display 230, a third user interface including at least one message mapped to category information corresponding to a selected object in case that a second user input for selecting one of the at least one object is detected.

The at least one message included in the third user interface according to an embodiment may include at least one message classified based on the category information regardless of sending information of the at least one message.

The information related to the unread messages based on the category information satisfying the predetermined condition according to an embodiment may include the number of unread messages mapped to the category information satisfying the predetermined condition and the total number of the unread messages.

The category information satisfying the predetermined condition according to an embodiment may include at least one of category information having a largest number of unread messages, category information recently selected by a user, category information having a highest frequency of selection by the user, or category information having a highest frequency of selection by the user for each time period.

The category-based message display method according to an embodiment may include, in case that a plurality of pieces of category information satisfy the predetermined condition, an operation of determining one piece of category information among the plurality of pieces of category information, based on category information having a highest frequency of selection by the user for a predetermined time period, category information of messages selected by the user in a specific time period, or category information of messages having receiving and sending histories for a predetermined time period.

The category-based message display method according to an embodiment may include, after the third user interface is displayed, in case that a third user input for changing a message among the at least one message included in the third user interface to a read state is detected, an operation of deleting the message changed to the read state from the third user interface. The category-based message display method according to an embodiment may include, in case that the third user input is not detected, an operation of maintaining the message in an unread state.

The category-based message display method according to an embodiment may include an operation of extracting contents of the message in case that the message is received. The category-based message display method according to an embodiment may include an operation of transmitting the extracted contents of the message and a threshold value related to category information to an artificial intelligence model 410. The category-based message display method according to an embodiment may include an operation of acquiring, from the artificial intelligence model 410, category information of the message determined by the artificial intelligence model 410, based on the contents of the message and the threshold value related to the category information. The category-based message display method according to an embodiment may include an operation of mapping the message and the acquired category information and storing the mapped message in a memory 220.

The operation of acquiring the category information of the message determined by the artificial intelligence model 410 from the artificial intelligence model 410 according to an embodiment may include an operation of acquiring, from the artificial intelligence model 410, a probability value related to the category information of the message together with the category information of the message. The threshold value related to the category information according to an embodiment may be adjustable based on the acquired probability value.

The category-based message display method according to an embodiment may include, in case that the category information of the message identified based on the contents of the message includes a plurality of pieces of category information, an operation of extracting, based on sending information of the message, a designated number of messages received for a predetermined time period from the sending information. The category-based message display method according to an embodiment may include an operation of extracting contents of each of the designated number of messages. The category-based message display method according to an embodiment may include an operation of transmitting the extracted contents of each of the messages, the plurality of pieces of category information, and the threshold value related to the category information to the artificial intelligence model 410. The category-based message display method according to an embodiment may include, an operation of acquiring, from the artificial intelligence model 410, one piece of category information determined by the artificial intelligence model 410, based on the contents of each of the messages, the plurality of pieces of category information, and the threshold value related to the category information among the plurality of pieces of category information. The category-based message display method according to an embodiment may include an operation of mapping the message and the acquired category information and storing the mapped message in a memory 220.

A non-transitory computer-readable recording medium storing instructions that, when executed by a processor 240 of an electronic device 101, cause the processor 240 to perform operations, according to an embodiment of the present disclosure, may cause an operation of identifying category information of a message based on contents of the message to be executed in case that the message is received. The non-transitory computer-readable recording medium storing instructions that, when executed by the processor 240 of the electronic device 101, cause the processor 240 to perform operations, according to an embodiment, may cause an operation of displaying, on a display 230, a first user interface including information related to unread messages based on category information satisfying a predetermined condition among at least one piece of category information and a list of the unread messages to be executed in case that an input for executing an application related to the message is detected. The non-transitory computer-readable recording medium storing instructions that, when executed by the processor 240 of the electronic device 101, cause the processor 240 to perform operations, according to an embodiment, may cause an operation of displaying, on the display 230, a second user interface including at least one object indicating the at least one piece of category information, information related to at least one unread message mapped to the at least one piece of category information, and the list of the unread messages to be executed in case that a first user input for displaying an unread message is detected. The non-transitory computer-readable recording medium storing instructions that, when executed by the processor 240 of the electronic device 101, cause the processor 240 to perform operations, according to an embodiment, may cause an operation of displaying, on the display 230, a third user interface including at least one message mapped to category information corresponding to a selected object to be executed in case that a second user input for selecting one of the at least one object is detected.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., through wires), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a display (230);
memory (220) storing instructions; and
a processor (240),
wherein the instructions, when executed by the processor (240), cause the electronic device (101) to:
in case that a message is received, identify category information of the message based on contents of the message;
in case that an input for executing an application related to the message is detected, display, on the display (230), a first user interface including information related to unread messages based on category information satisfying a predetermined condition among at least one piece of category information, and a list of the unread messages;
in case that a first user input for displaying the unread messages is detected, display, on the display (230), a second user interface including at least one object indicating the at least one piece of category information, information related to at least one unread message mapped to the at least one piece of category information, and the list of the unread messages; and
in case that a second user input for selecting one of the at least one object is detected, display, on the display (230), a third user interface including at least one message mapped to category information corresponding to the selected object.

2. The electronic device (101) of claim 1, wherein the information related to the unread messages based on the category information satisfying the predetermined condition includes the number of unread messages mapped to the category information satisfying the predetermined condition and the total number of the unread messages,
wherein the category information satisfying the predetermined condition comprises at least one piece of category information having a largest number of unread messages, category information recently selected by a user, category information having a highest frequency of selection by the user, or category information having a highest frequency of selection by the user for each time period, and
wherein the at least one message included in the third user interface comprises at least one message classified based on the category information regardless of sending information of the at least one message.

3. The electronic device (101) of claim 2, wherein the instructions, when executed by the processor (240), further cause the electronic device (101) to, in case that a plurality of pieces of category information satisfy the predetermined condition, determine one piece of category information among the plurality of pieces of category information, based on category information having a highest frequency of selection by the user for a predetermined time period, category information of messages selected by the user in a specific time period, or category information of messages having receiving and sending histories for a predetermined time period.

4. The electronic device (101) of any of claims 1 to 3, wherein the instructions, when executed by the processor (240), further cause the electronic device (101) to:
in case that a third user input for changing a message of the at least one message included in the third user interface to a read state is detected after the third user interface is displayed, delete the message changed to the read state from the third user interface; and
in case that the third user input is not detected, maintain the message in an unread state.

5. The electronic device (101) of any of claims 1 to 4, wherein the instructions, when executed by the processor (240), further cause the electronic device (101) to:
in case that the message is received, extract the contents of the message;
transmit the extracted contents of the message and a threshold value related to category information to an artificial intelligence model (410);
acquire, from the artificial intelligence model (410), category information of the message determined by the artificial intelligence model (410), based on the contents of the message and the threshold value related to the category information; and
map the message to the acquired category information and store the mapped message and category information in the memory (220).

6. The electronic device (101) of claim 5, wherein the instructions, when executed by the processor (240), further cause the electronic device (101) to acquire a probability value related to the category information of the message, together with the category information of the message, from the artificial intelligence model (410), and
wherein the threshold value related to the category information is adjustable based on the acquired probability value.

7. The electronic device (101) of any of claims 1 to 4, wherein the instructions, when executed by the processor (240), further cause the electronic device (101) to:
in case that the category information of the message identified based on the contents of the message comprises a plurality of pieces of category information, extract, based on the sending information of the message, a designated number of messages received for a predetermined time period from the sending information;
extract contents of each of the designated number of messages;
transmit the extracted contents of each of the messages, the plurality of pieces of category information, and a threshold value related to the category information to the artificial intelligence model (410);
acquire, , from the artificial intelligence model (410), one piece of category information determined by the artificial intelligence model (410), based on the contents of each of the messages, the plurality of pieces of category information, and the threshold value related to the category information among the plurality of pieces of category information; and
map the message to the acquired category information and store the mapped message and category information in the memory.

8. The electronic device (101) of any of claims 1 to 7, wherein the instructions, when executed by the processor (240), further cause the electronic device (101) to:
in case that one of at least one message included in the third user interface is selected, identify sending information of the selected message; and
display, on the display (230), a fourth user interface including at least one message related to the identified sending information.

9. A method for displaying a message based on a category, the method comprising:
in case that a message is received, identifying category information of the message based on contents of the message;
in case that an input for executing an application related to the message is detected, displaying, on a display (230), a first user interface including information related to unread messages based on category information satisfying a predetermined condition among at least one piece of category information, and a list of the unread messages;
in case that a first user input for displaying the unread messages is detected, displaying, on the display (230), a second user interface including at least one object indicating the at least one piece of category information, information related to at least one unread message mapped to the at least one piece of category information, and the list of the unread messages; and
in case that a second user input for selecting one of the at least one object is detected, displaying, on the display (230), a third user interface including at least one message mapped to category information corresponding to the selected object.

10. The method of claim 9, wherein the information related to the unread messages based on the category information satisfying the predetermined condition comprises the number of unread messages mapped to the category information satisfying the predetermined condition and the total number of the unread messages,
wherein the category information satisfying the predetermined condition comprises at least one of category information having a largest number of unread messages, category information recently selected by a user, category information having a highest frequency of selection by the user, or category information having a highest frequency of selection by the user for each time period, and
wherein the at least one message included in the third user interface comprises at least one message classified based on the category information regardless of sending information of the at least one message.

11. The method of claim 10, further comprising:
in case that a plurality of pieces of category information satisfy the predetermined condition, determining one piece of category information among the plurality of pieces of category information, based on category information having a highest frequency of selection by the user for a predetermined time period, category information of messages selected by the user in a specific time period, or category information of messages having receiving and sending histories for a predetermined time period.

12. The method of claim 9 or 11, further comprising:
in case that a third user input for changing a message among the at least one message included in the third user interface to a read state is detected after the third user interface is displayed, deleting the message changed to the read state from the third user interface; and
in case that the third user input is not detected, maintaining the message in an unread state.

13. The method of any one of claims 9 to 12, further comprising:
in case that the message is received, extracting the contents of the message;
transmitting the extracted contents of the message and a threshold value related to category information to an artificial intelligence model (410);
acquiring, from the artificial intelligence model (410), category information of the message determined by the artificial intelligence model (410), based on the contents of the message and the threshold value related to the category information; and
mapping the message and the acquired category information and storing the mapped message in a memory (220),
wherein the acquiring of the category information of the message determined by the artificial intelligence model (410) from the artificial intelligence model (410) comprises acquiring, from the artificial intelligence model (410), a probability value related to the category information of the message together with the category information of the message, and
wherein the threshold value related to the category information is adjustable based on the acquired probability value.

14. The method of any one of claims 9 to 12, further comprising:
in case that the category information of the message identified based on the contents of the message comprises a plurality of pieces of category information, extracting, based on sending information of the message, a designated number of messages received for a predetermined time period from the sending information;
extracting contents of each of the designated number of messages;
transmitting the extracted contents of each of the messages, the plurality of pieces of category information, and a threshold value related to category information to an artificial intelligence model (410);
acquiring, from the artificial intelligence model (410), one piece of category information determined by the artificial intelligence model (410), based on the contents of each of the messages, the plurality of pieces of category information, and the threshold value related to the category information among the plurality of pieces of category information; and
mapping the message and the acquired category information and storing the mapped message in a memory (220).

15. A non-transitory computer-readable recording medium storing instructions that, when executed by a processor (240) of an electronic device (101), cause the processor (240) to perform:
in case that a message is received, identifying category information of the message based on contents of the message;
in case that an input for executing an application related to the message is detected, displaying, on a display (230), a first user interface including information related to unread messages based on category information satisfying a predetermined condition among at least one piece of category information, and a list of the unread messages;
in case that a first user input for displaying the unread messages is detected, displaying, on the display (230), a second user interface including at least one object indicating the at least one piece of category information, information related to at least one unread message mapped to the at least one piece of category information, and the list of the unread messages; and
in case that a second user input for selecting one of the at least one object is detected, displaying, on the display (230), a third user interface including at least one message mapped to category information corresponding to the selected object.
